# EUROPEAN PATENT APPLICATION

(11) **EP 4 838 856 A1**
(43) Date of publication of application: **11.11.2026**
(21) Application number: 25224116.1
(22) Date of filing: 16.12.2025
(51) Int. Cl.: H04L 41/5051, H04L 41/04, H04L 41/40, H04L 41/342, H04W 8/00, H04W 24/00

(54) **UNIFIED DATA MANAGEMENT ARCHITECTURE FOR DATA COLLECTION AND EXPOSURE PIPELINES IN 6GS**

(30) Priority: 09.05.2025 US 202563803419 P
(71) Applicant: INTEL Corporation, Santa Clara, CA 95054 (US)
(72) Inventor: KEDALAGUDDE, Meghashree Dattatri, Portland, 97229 (US); KOLEKAR, Abhijeet Ashok, Leander, 78641 (US); JAIN, Puneet, Portland, 97229 (US)
(74) Representative: Viering, Jentschura & Partner mbB Patent- und Rechtsanwälte

(57) **Abstract**

A device for a wireless communication network, the device may include processing circuitry coupled to storage, the processing circuitry is configured to: receive a request for a data collection service from a data consumer; determine, based on the request, network functions to form a data management pipeline, wherein the network functions comprise at least one of a data processing function and/or a data repository function; and establish, for the data collection service, a data flow path identified by a data flow identifier, wherein the data flow path comprises the determined network functions.

## Description

### CROSS-REFERENCE TO RELATED APPLICATIONS

This application claims priority to United States Provisional Application No. 63/803,419 filed on May 9, 2025.

### BACKGROUND

Wireless networks are essential for modem communication, supporting diverse devices and applications. As data demands grow, these networks must enhance performance and reliability. Key advancements focus on optimizing data handling and network management.

### BRIEF DESCRIPTION OF THE DRAWINGS

FIGs. 1-5 depict illustrative schematic diagrams for optimized data pipelines, in accordance with one or more example embodiments of the present disclosure.
FIG. 1 shows an example of an overall unified data framework block diagram showing all interfaces;
FIG. 2 shows an example of unified data framework functional components in 6GC -Option 1;
FIG. 3 shows an example of a unified data framework functional components in 6G RAN -Option 2;
FIG. 4 shows an example of a unified data framework functional components split between 6G RAN and 6GC -Option 3;
FIG. 5 shows an example call flow for unified data framework (using NWDAF as consumer);
FIG. 6 illustrates a flow diagram of illustrative process for an illustrative optimized data pipelines system, in accordance with one or more example embodiments of the present disclosure.
FIG. 7 illustrates an example network architecture, in accordance with one or more example embodiments of the present disclosure.
FIG. 8 schematically illustrates a wireless network, in accordance with one or more example embodiments of the present disclosure.
FIG. 9 illustrates components of a computing device, in accordance with one or more example embodiments of the present disclosure.
FIG. 10 illustrates a network in accordance with various embodiments.
FIG. 11 illustrates a simplified block diagram of artificial (Al)-assisted communication between a user equipment (UE) and a radio access network (RAN), in accordance with various embodiments.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

The present disclosure relates generally to wireless networks and, more specifically, to data pipeline architectures in 6G networks.

With the advent of Sixth Generation (6G) technology and the use cases discussed in the scope of 6G evolution, such as Integrated Sensing and Communication (ISC), Artificial Intelligence (AI) native 6G network, Energy Efficient Network (EEN), and Immersive Communication (IC), the diverse nature of the data expected to be supported in a 6G network is evident. There is a clear need for a 6G Network Data Framework (6G-NDF) to collect a large amount of diverse data to support these new capabilities. For example, ISC enables seamless integration of communication and sensing capabilities, allowing devices to simultaneously transmit data and sense their environment, which is crucial for applications like autonomous vehicles and smart cities.

The architectural evolution of data collection mechanisms in the Fifth Generation (5G) system was done on a reactive basis, i.e., based on the use cases and features developed since Release 15 (Rel-15). Current approaches, including Minimization of Drive Tests (MDT)-based, Location Positioning Protocol (LPP)-based, Network Data Analytics Function (NWDAF)-driven, and Data Collection and Analysis Function (DCAF)-based methods, introduce significant complexity in data gathering across the Control Plane (CP) and User Plane (UP). For instance, MDT-based methods are used to optimize network performance by collecting data from user devices without the need for extensive drive testing, which can be resource-intensive. The fragmented solutions based on individual use cases have standards overhead as well as duplicate data collection.

Sixth Generation (6G): The next generation of mobile network technology, expected to provide faster speeds, lower latency, and more reliable connections than 5G.

Integrated Sensing and Communication (ISC): A technology that combines communication and sensing capabilities, allowing devices to transmit data and sense their environment simultaneously.

Artificial Intelligence (AI) native 6G network: A network that inherently incorporates AI technologies to optimize performance, manage resources, and enhance user experiences.

Energy Efficient Network (EEN): A network designed to minimize energy consumption while maintaining high performance, crucial for sustainable technology development.

Immersive Communication (IC): Communication technologies that provide highly interactive and engaging experiences, often involving virtual or augmented reality.

6G Network Data Framework (6G-NDF): A framework designed to handle the diverse and large-scale data requirements of 6G networks.

Fifth Generation (5G): The current generation of mobile network technology, offering improved speed and connectivity over previous generations.

Release 15 (Rel-15): A set of standards and specifications for 5G technology, developed by the 3rd Generation Partnership Project (3GPP).

Minimization of Drive Tests (MDT): A method for optimizing network performance by collecting data from user devices, reducing the need for physical drive testing.

Location Positioning Protocol (LPP): A protocol used for determining the geographic location of a device within a network.

Network Data Analytics Function (NWDAF): A function within a network that analyzes data to provide insights and improve network performance.

Data Collection and Analysis Function (DCAF): A function that collects and analyzes data to support network operations and decision-making.

Control Plane (CP): The part of a network responsible for signaling and control functions.

User Plane (UP): The part of a network responsible for carrying user data.

Example embodiments of the present disclosure relate to systems, methods, and devices for Unified data management architecture for data collection and exposure pipelines in 6GS.

In this disclosure a unified data management architecture is introduced to enable data collection, processing and exposure to support the diverse data types and services in 6G network.

In one or more embodiments, a optimized data pipelines system may comprise one or more components, which may include one or more of: apparatus, device, user equipment (UE), gNodeB, and/or other network elements. At its most basic configuration, the system includes one or more processors, and/or memory, and/or instructions. The processor(s) may be implemented using general-purpose microprocessors, and/or digital signal processors (DSPs), and/or field-programmable gate arrays (FPGAs), and/or other suitable computational entities capable of performing calculations or manipulations of information. The memory may include RAM, and/or ROM, and/or flash memory, and/or other storage media suitable for storing instructions and/or data necessary for system operation. These components, individually or in combination, enable the execution of processes that facilitate communication and/or functionality within the system.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

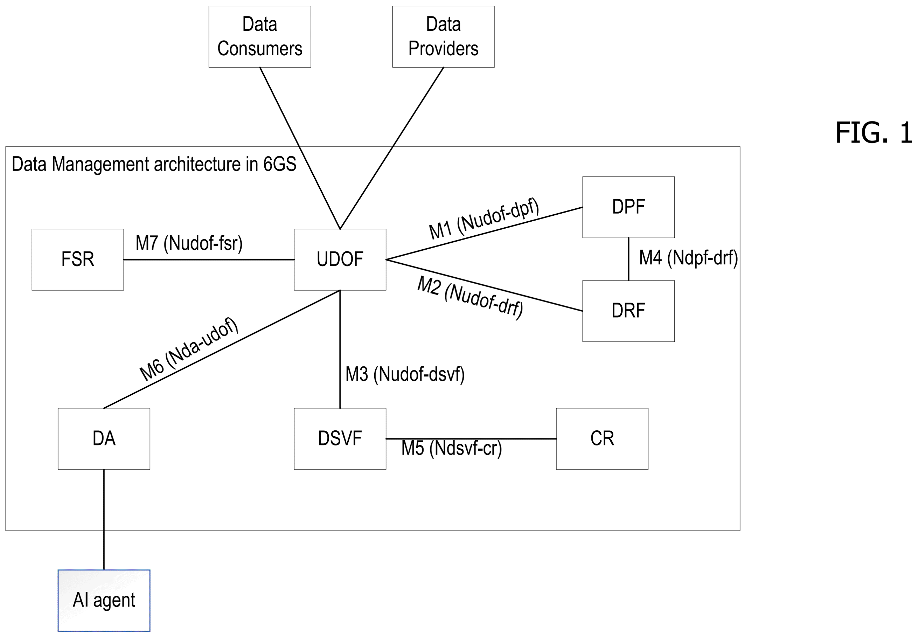

FIGs. 1-5 depict illustrative schematic diagrams for optimized data pipelines, in accordance with one or more example embodiments of the present disclosure.

Below a unified data pipeline architecture is introduced to enable data collection, processing and exposure to support the diverse data types and services across UE, RAN, Core and OAM in 6G network - different architectural options are presented.

In the present disclosure, specific terminology is employed to describe various logical entities and network functions, such as the 'Domain Orchestration Function' (DOF) and the 'Data Security and Validity Function' (DSVF). It is to be understood that these terms are used herein as descriptive nomenclature to define the functional roles and operational capabilities within the network architecture, rather than as rigid designations of standardized entities. These terms should be interpreted according to a functional nomenclature (i.e., a 'function for [Operation]'); for example, the term 'Domain Orchestration Function' refers broadly to any network function, logical node, or entity configured to perform control function or domain orchestration, and the term 'Data Security and Validity Function' refers to any network function, logical node, or entity configured to perform data security and validity operations. Accordingly, the embodiments described herein are not limited to the specific names used but encompass any corresponding entities in current or future network standards (e.g., 3GPP 6G specifications) that are arranged to execute the described functions, regardless of the specific naming convention eventually adopted in such standards. This also applies to entities defined using the terminology of 5G, considering that the nomenclature of these entities can also change in future generations. Some of network entities described herein (e.g. UDOF, DSVF, DPF, DRF, DA) maybe co-located and may support point to point connection.

Figure 1 shows an example of an overall unified data framework block diagram showing all interfaces.Figure 1 illustrates a data management architecture reference diagram.

High level function description of various entities described, in accordance with Figure 1, herein includes the following:
- Unified Data Orchestration Function (UDOF): UDOF is the first point of entry for the Data collection service consumer. It orchestrates end-to-end data management pipelines, interfaces with a Federated Service Registry (FSR) for discovery, and controls a pub/sub Data Broker that delivers data topics. For example, the data agent based on the trigger for a specific service (for example - sensing data request from the sensing function in the core network, ML model training request, request from an AI agent etc.) can be a consumer for UDOF.
- Data Repository Function (DRF) -DRF stores the collected raw data or transformed data. Multiple instances of DRF may be supported in a 6G operator network in the RAN, 6GC, 6G OAM based on the deployment and operational needs of the 6G network. In some embodiment, ADRF defined in 5GC may subsume the role of DRF.
- Data Processing Function (DPF) -DPF is responsible for transforming and manipulating the data according to predefined rules and logic. In this step the collected raw data is cleansed, mapped and transformed into format required to meet the operational needs of the 6G network.
- Federated Service Registry (FSR) - holds metadata for DSVFs/DPFs/DSRFs; peers with registries in other domains to enable cross-operator discovery.
- Data security and validity function (DSVF) - authenticates all of the data management pipeline participants i.e., data providers (UE, NF, AF, sensing entities) , also the data functions or entities that form the data pipeline using X.509 or W3C DID/Verifiable-Credential; verifies message integrity, enforces user-consent and privacy policy, and can anonymize data before exposure, validate the data provider.
- Data Agent (DA) - Responsible for using domain knowledge to transform data to meet service operational needs. DA may interface with AI agents to complete parts of a complex AI operational task or maybe a sub-component of an AI agent. DA instances may register with the FSR as stateless 'Function-as-a-Service' elements, enabling DOF to chain them at runtime.
- Consent Repository (CR) - optional logical function (could extend UDM) that stores OAuth 2.0 / RNAA tokens or user VC proofs; queried by DSVF during policy checks.

NOTE: Different network functions (or nodes) under Unified Data Management Architecture are shown as shown as examples. In certain embodiments these Network Functions (NF) may be referred to by different name, (for example - UDOF may be called as UDMF (Unified data management function), etc.) but overall functionality should remain the same. In certain embodiment, functionality of these NF may be combined into one NF. In certain embodiment, functionality of one NF may be split into multiple NFs.

### Few other definitions:

A topic is a logical channel (name or path) on the Data Broker to which data producers publish messages and from which data consumers subscribe to receive those messages. e.g. /<plmn-id>/<domain>/<sub-domain>/<resource>/<data-type>

Reference point description for unified data management architecture in 6GS:
- M1: Reference point between the UDOF and DPF
- M2: Reference point between the UDOF and DRF
- M3: Reference point between the UDOF and DSVF
- M4: Reference point between the DPF and DRF
- M5: Reference point between the DSVF and CR
- M6: Reference point between the UDOF and DA
- M7: Reference point between the UDOF and FSR

### Deployment options for unified data framework:

### Option 1 (Core network anchored data management architecture):

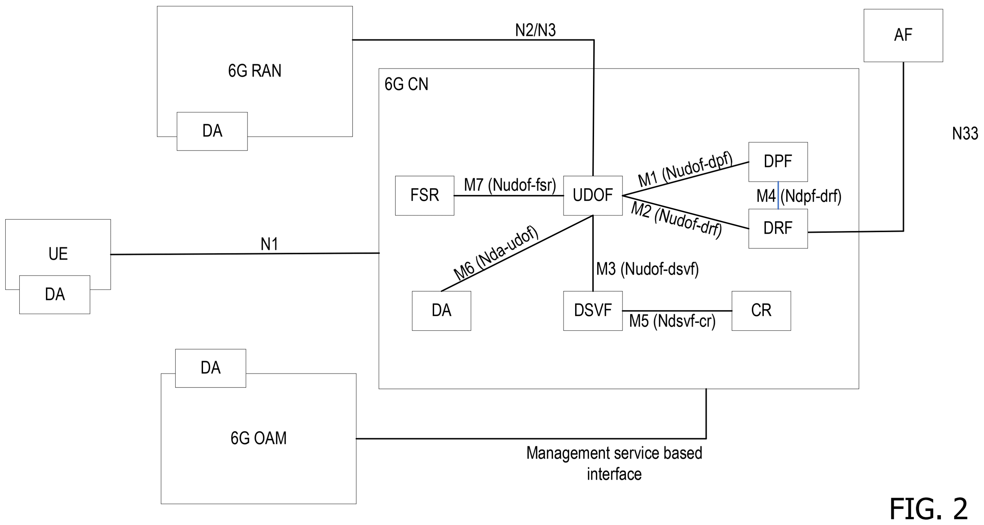

Figure 2 shows an example of unified data framework functional components in 6GC -Option 1.
- UDOF, FSR, Data Broker, DPF, DSVF, DRF/ADRF in 6G Core Network.
- The UDOF exposes north-bound CAPIF APIs so external AFs can request pipeline creation. UDOF consults the FSR for available DRF/DPF assets and instructs the Broker to instantiate topics.
- The data pipeline required for data collection and exposure is established by the 6G Core Network. When the UDOF receives a data collection request for a given service, the UDOF based on the incoming request is responsible for creation of a data pipeline with the appropriate network functions/entities, maintaining the data pipeline for the entire life of the required data collection service, and termination of the data pipeline once the data collection for the incoming service is completed.
- Depending on the data collection and processing required for a given service the UDOF initiates the subscription/notification with the data providers (UE, RAN, OAM, other network functions within the 6G core network, AF).
- The UDOF issues pub/sub-topic grants on the Broker. DSVF attaches policy filters (e.g., MAC verification, encryption, location blurring) before any message reaches a subscribe
- When the data management pipeline is requested for data collection to cater to AI/ML service for ML model inference/training, the model training and inference function is present in 6G core network. In some embodiment, data collection in 6G core network is initiated by a 3rd party application entity to cater to an AI/ML service or Sensing service. In this case the network data collected is exposed to the 3rd party application entity via the NEF or an equivalent 6G network function.

In some embodiment, the architecture option 1 described here and in Figure 1 is applicable to the 5GS supported by the 5GC for backward compatibility.

### Option 2 (RAN anchored data pipeline architecture):

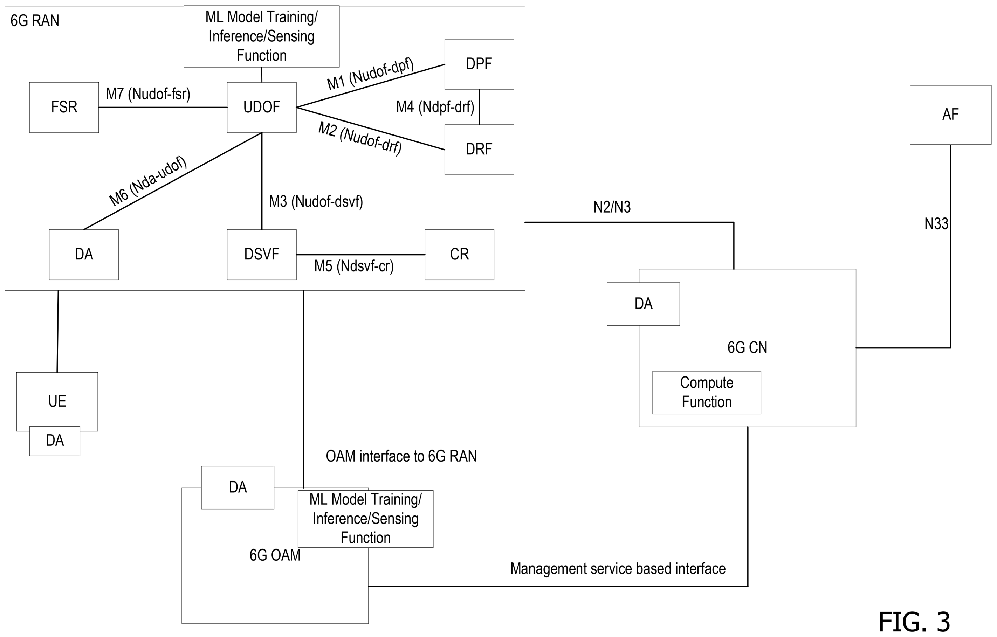

Figure 3 shows an example of a unified data framework functional components in 6G RAN -Option 2.
- UDOF, DRP, DPF, DSVF in 6G RAN.
- The data management pipeline required for data collection and exposure is established by the 6G RAN. When the UDOF in the RAN receives a data collection request for a given service, the UDOF based on the incoming request is responsible for creation of a data pipeline with the appropriate network functions/entities, maintaining the data pipeline for the entire life of the required data collection service, and termination of the data pipeline once the data collection for the incoming service is completed. The request for data collection and exposure is sent to UDOF in 6G RAN from the 6G core network. The service request may be triggered by a NF entity within the 6G core network, ML model training/ inference function in the 6G RAN or an external request from AF via the NEF (or an equivalent NF in 6G network). Based on the service for which data collected is required and latency requirement of the service, the compute network function in the 6G core network or an equivalent network function responsible for compute capability tracking or monitoring in the 6G network decides to offload the data collection, storage and computation to the 6G RAN. In some embodiment, the ML model training/ inference function in OAM may request the data collection from RAN based on which the UDOF in 6G RAN establishes a data management pipeline to fulfil the data collection and processing request from OAM.
- Depending on the data collection and processing required for a given service the UDOF initiates the subscription/notification with the data providers (UE, RAN, OAM, AF).
- When the data management pipeline is requested for data collection to cater to AI/ML service for ML model inference/training, the model training and inference function is present in 6G RAN. The 6G RAN compute capability is used for ML model training or inference at the edge network. In some embodiments, data collection in RAN is initiated by OAM to cater to an AI/ML service or Sensing service where the ML model training/ inference/sensing function is in 6G OAM.

### Option 3 (Split data repository architecture):

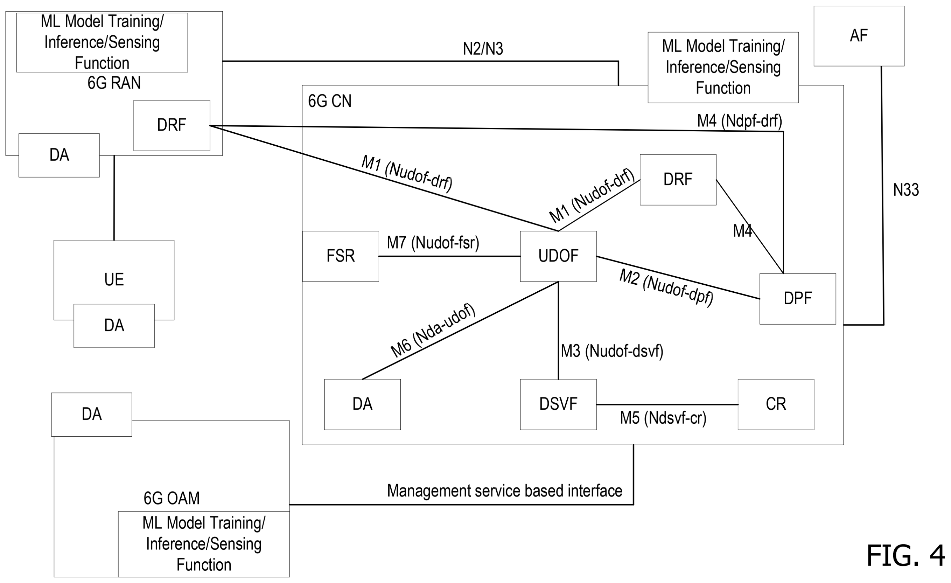

Figure 4 shows an example of a unified data framework functional components split between 6G RAN and 6GC -Option 3.

### UDOF, DSVF, DPF in 6G core network, DRP in 6G RAN.

The data management pipeline required for data collection and exposure is split between the 6G RAN and 6G core network function, established by the UDOF in the 6G core network, the collected and processed data is stored at the DRP in the 6G RAN. When the UDOF receives a data collection request for a given service, the UDOF based on the incoming request is responsible for creation of a data pipeline with the appropriate network functions/entities, maintaining and storage of the collected data by the data pipeline for the entire life of the required data collection service, and termination of the data pipeline once the data collection for the incoming service is completed.

Depending on the data collection and processing required for a given service the UDOF initiates the subscription/notification with the data providers (UE, RAN, OAM, other network functions within the 6G core network, AF). The data collection request may be triggered by ML model training/ inference/sensing function in the 6G RAN or the ML model training/ inference function in OAM or the ML model training/ inference function in 6G Core network. Based on the input data collection request, the UDOF may decide to store the collected data in the DRF in the 6G RAN (for example- if the input request for data collected is from a ML model training function in 6G RAN , the UDOF may choose to select a DRF in 6G RAN to maintain the collected input data close in proximity to the compute function where the ML model workload is processed). In some embodiment, data collection in 6G core network is initiated by a 3rd party application entity to cater to an AI/ML service or Sensing service. In this case the network data collected is exposed to the 3rd party application entity via the NEF or an equivalent 6G network function.

In some embodiment, the ML model training may be split between RAN and 6G core network function such as NWDAF. The UDOF may store parts of the collected in DRP in RAN when the AI workload for ML training is to be processed in 6G RAN and the UDOF may store parts of the collected data in DRP in 6G core network when the AI workload for ML training is to be processed in 6G core network.

In some embodiment, the UDOF based on the input request for data collection may assign a DataTag to associate the data storage, locality and retention policy based on which the data might reside or replicate in RAN Edge and 6G core network.

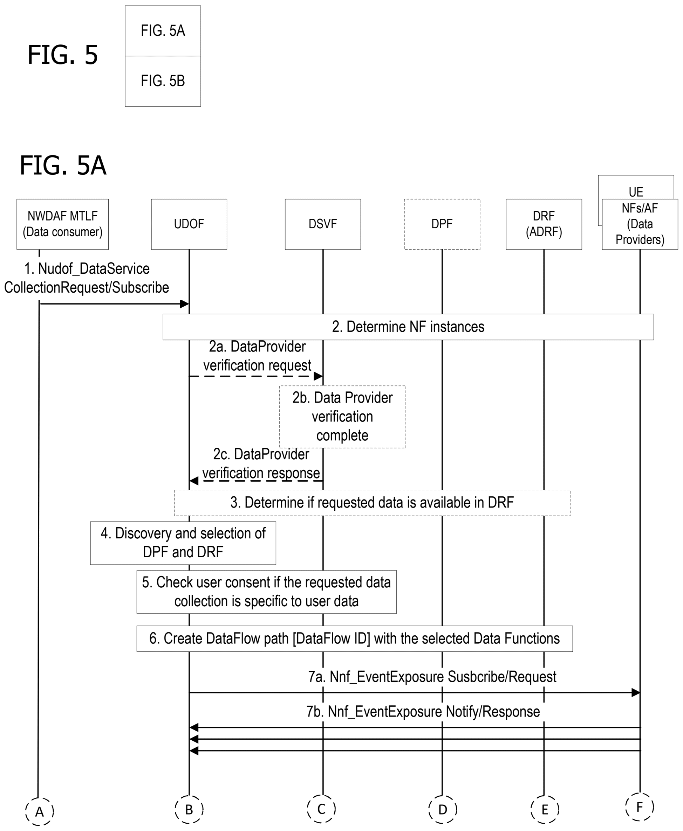

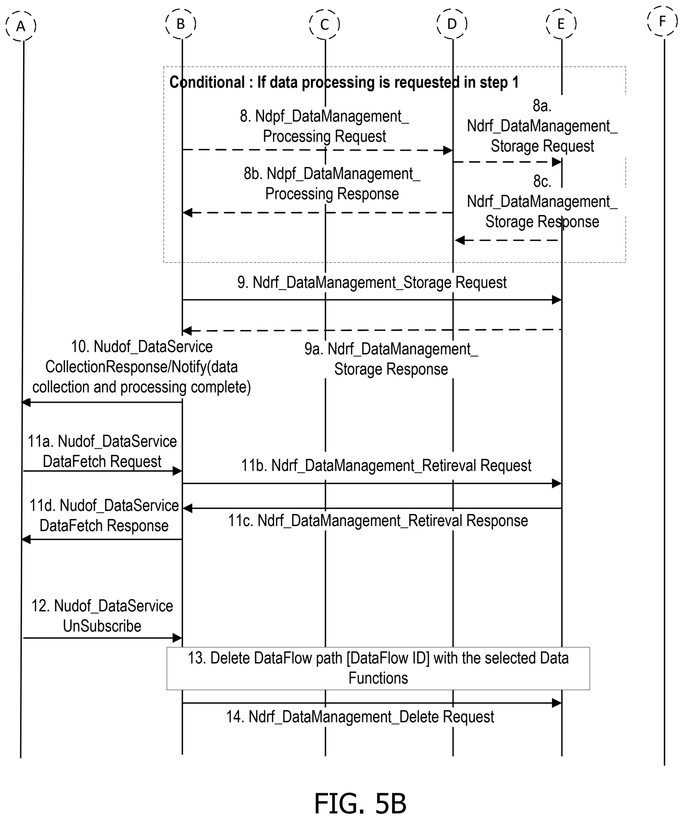

Figure 5 shows an example call flow for unified data framework (using NWDAF as consumer). A call flow as described herein may include the following:
1. The Data consumer sends a data collection service request/subscribe to the UDOF. The UDOF based on the input parameters provided by the Data consumer will determine the entities/network function that form the data management pipeline for data collection and exposure.
   The input information/parameters provided by the Data consumer includes but not limiting to:
   - Service ID represents identification of the consumer requesting the data collection. Example - NWDAF_MTLFTraining, NWDAF_AnLFInference, SensingFunction, LMF_Positioning, etc.
   - ServiceAttributes provides the data collection service specific attribute list. For example - For NWDAF_MTLFTraining, ServiceAttribute includes - type of analytics (NF load analytics, UE mobility analytics, Signalling storm analytics), Analytics Filter Information, n, Time period over which data collection is requested.
   - Indication on whether Data Provider verification is required.
   - Indication on whether data processing is required. If yes, DataProcessing Attributes are included such as data feature imputation, feature scaling normalization, standardization, discretization, one-hot encoding, data formatting and processing instructions (e.g., aggregate notifications and summary information from multiple notifications).
2. Based on the ServiceAttribute list provided in step 1, the UDOF determines the list of Data providers (NF instances, OAM, AF, UE).
2(a) If Data Provider verification is requested in step 1, the UDOF sends the Data Provider verification request to the DSVF. After identifying the candidate data-provider list, the UDOF issues a Data-Provider-Verify request to the DSVF. The request contains ProviderList { ProviderID, ProviderType, Home-PLMN, ExpectedDataSet, RequiredTrustLevel } for every candidate provider. For UE-based providers, the request also carries the UE's SUPI (or a temporary identifier) and, if available, the UE-side producer-token (JWT) previously issued by the Authorization Function. For AF Data providers, the request carries the provider's X.509 certificate fingerprint (as advertised in NRF or CAPIF).
2(b) Upon receipt of the verification request, the DSVF performs provider authentication and policy checks. Authenticates each provider by executing a mutual-TLS handshake (NF/AF) or an EAP-AKA / GBA challenge (UE). Validates the presented credential chain against the operator PKI; if a foreign PLMN issues the credential, the DSVF retrieves the corresponding root certificate and trust policy from the Federated Service Registry. For UE providers, parses the producer-token to extract datasetId and consentId, then queries UDM/Consent-DB to confirm that consent is active and un-revoked.
2(C) When the Data Provider verification is complete, the DSVF sends a response to UDOF indicating the Data providers which were successfully verified.
3. The UDOF checks if data service collection request is in process (from the Data Consumer from a prior request) for the Service ID and Service Attribute provided in step 1.

If yes, the UDOF identifies whether data processing is required based on the input parameter in step 1. If the existing DataFlow path established for the prior request from Data Consumer can be modified to satisfy the requirements of the new data collection request in step 1, the UDOF modifies an existing DataFlow path (identified by the DataFlow ID) instead of creating a new DataFlow path for the request in step 1. Skip step 4 and 5.

If no, proceed to step 4.
4. The UDOF utilizes the NRF to discover the DRF and DPF unless the DRP and DPF information is available based on local configuration in UDOF. The factors for selection of DPF may include Data formatting and processing capability, data feature scaling capability, data annotation capability.
5. If part of data to be collected from Data providers (identified in step 2) is user data, then user consent needs to be verified. If verified the UDOF subscribes to the DSVF (or entity responsible for user consent such as UDM or Consent-DB) to receive any updates to the user consent changes, proceed to step 6. If not, the UDOF sends a data collection request failed response to the Data Consumer with cause code as user consent not provided.
6. The UDOF establishes a DataFlow path identified by the DataFlow ID associated with the Service ID in step 1. The DataFlow path includes the data flow functions required as identified in step 4. The DataFlow path created in this step is used to establish the event notifications requests from the Data Providers in step 7 and each Event notification is step 7b is tagged with the DataFlowID for further DataManagement by the UDOF.
7. (a)The UDOF invokes the event subscription requests to the Data Providers associated with the DataFlow in step 6.
(b) When new data is available at the Data Provider for the event subscribed in step 7a, the Data Provider sends the event notification response to the UDOF.
8. If data processing is included in the DataFlow path identified by the DataFlow ID, the UDOF sends the Ndpf_DataManagement Processing request to the DPF with the DRF ID where the processed data is to be stored. If data processing is not included in the DataFlow path, skip step 8. The DataProcessing Attributes as requested in step1 is included in this request. The DPF performs the data formatting, processing and annotation as per the DataProcessing Attributes.
   (a)The data collected and processed in step 8 is stored in the ADRF with an DataSetTag assigned corresponding to the DataFlow ID for data collection service request in step 1.
   (b) The DRF sends a response back to the DPF that the data is stored with the DataSetTag.
   (C) The DPF sends the response with the DataSetTag to UDOF that the data is processed and stored in the DRF. Skip step 9.
9. The UDOF sends the Nadrf_DataManagement_Storage request to the DRF where the event data associated with DataFlow ID are stored.
   (a) The DRF sends a response to UDOF that the data is stored with the DataSetTag.
   After step 9, if notification is received from DSVF about change in user consent status (e.g., user consent for data collection for a given subscriber is revoked), then the UDOF unsubscribes for data collection corresponding to the UE(s) and sends a Ndrf_DataManagement_Delete message to the DRF.
10. The UDOF sends the Nudof_DataService Collection response to notify the Data Consumer that the data requested for the Data service is collected and stored in the data repository DRF. The UDOF may optionally include the DRF ID.
11. The Data Consumer sends a Nudof_DataFetch request to UDOF including the Service ID parameter. The UDOF based on the DataFlow ID associated with the Service ID, sends the Ndrf_DataManagement storage request to the DRF with the DataSetTag. The DRF sends the stored data in the response back to the UDOF which relays the data to the Data Consumer in Nudof_DataFetch response.
12. The data consumer (NWDAF MTLF) sends Nudof_DataService Unsubscribe message to the UDOF when the data collection for the Service ID indicated in step 1 is no longer required.
13. The UDOF deletes the Data Flow path established in step 6 for the data collection requested for the Service ID, all the data function instances associated with the Data Flow ID are released.
14. The UDOF sends the Ndrf_DataManagement_Delete request to the DRF, the request includes the DataTag attribute which the stored data records are associated to. The DRF indicates the result using Ndrf_DataManagement_Delete response service operations.

With reference to the signaling flow illustrated in FIG. 5, it is noted that this diagram depicts a comprehensive example of a data collection and processing sequence within the proposed architecture. This flow is intended to illustrate the logical interactions and interfaces between network functions rather than a rigid, mandatory chronological sequence. Consequently, unless a specific step is logically prerequisite to another (e.g., a response following a request), the operations shown may be performed in varying orders, in parallel, or may be omitted entirely in specific implementations. For example, intermediate steps related to data repository checks, specific discovery procedures, or conditional processing branches may be bypassed or modified depending on the specific service requirements (e.g., real-time vs. buffered data). Furthermore, the specific message names and service operations (e.g., 'Nudof_', 'Ndrf_') depicted in the figure are used as descriptive nomenclature for the service-based interfaces and should not be construed as limiting the invention to a specific protocol version or standard.

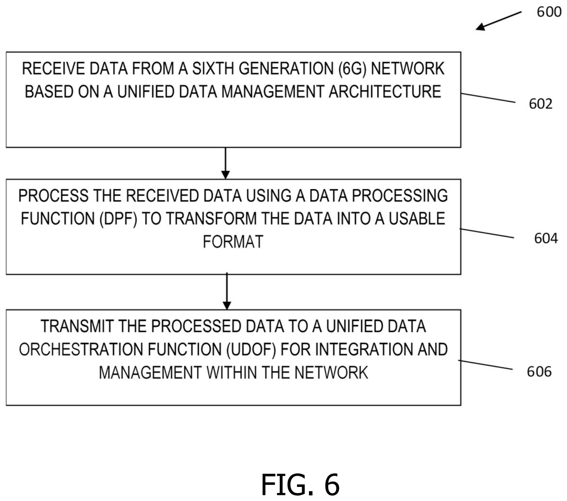

6In some embodiments, the electronic device(s), network(s), system(s), chip(s) or component(s), or portions or implementations thereof, of the figures herein may be configured to perform one or more processes, techniques, or methods as described herein, or portions thereof. One such process is depicted in FIG. 6.

For example, the process may include, at 602, receive data from a Sixth Generation (6G) network based on a unified data management architecture.

The process further includes, at 604, process the received data using a Data Processing Function (DPF) to transform the data into a usable format.

The process further includes, at 606, transmit the processed data to a Unified Data Orchestration Function (UDOF) for integration and management within the network.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

It is understood that the above descriptions are for purposes of illustration and are not meant to be limiting.

The figures described below illustrate illustrate various systems, devices, and components that may implement aspects of disclosed embodiments.

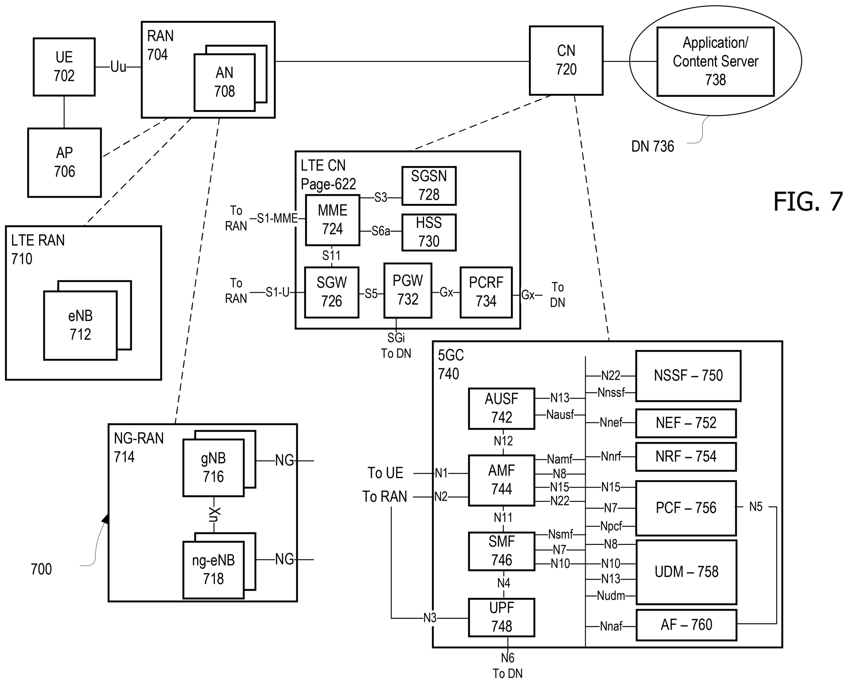

FIG. 7 illustrates an example network architecture 700 according to various embodiments. The network 700 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 700 includes a UE 702, which is any mobile or non-mobile computing device designed to communicate with a RAN 704 via an over-the-air connection. The UE 702 is communicatively coupled with the RAN 704 by a Uu interface, which may be applicable to both LTE and NR systems. Examples of the UE 702 include, but are not limited to, a smartphone, tablet computer, wearable computer, desktop computer, laptop computer, in-vehicle infotainment system, in-car entertainment system, instrument cluster, head-up display (HUD) device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, machine-to-machine (M2M), device-to-device (D2D), machine-type communication (MTC) device, Internet of Things (IoT) device, and/or the like. The network 700 may include a plurality of UEs 702 coupled directly with one another via a D2D, ProSe, PC5, and/or sidelink (SL) interface. These UEs 702 may be M2M/D2D/MTC/IoT devices and/or vehicular systems that communicate using physical sidelink channels such as, but not limited to, PSBCH, PSDCH, PSSCH, PSCCH, PSFCH, etc. The UE 702 may perform blind decoding attempts of SL channels/links according to the various embodiments herein.

In some embodiments, the UE 702 may additionally communicate with an AP 706 via an over-the-air (OTA) connection. The AP 706 manages a WLAN connection, which may serve to offload some/all network traffic from the RAN 704. The connection between the UE 702 and the AP 706 may be consistent with any IEEE 802.11 protocol. Additionally, the UE 702, RAN 704, and AP 706 may utilize cellular-WLAN aggregation/integration (e.g., LWA/LWIP). Cellular-WLAN aggregation may involve the UE 702 being configured by the RAN 704 to utilize both cellular radio resources and WLAN resources.

The RAN 704 includes one or more access network nodes (ANs) 708. The ANs 708 terminate air-interface(s) for the UE 702 by providing access stratum protocols including RRC, PDCP, RLC, MAC, and PHY/L1 protocols. In this manner, the AN 708 enables data/voice connectivity between CN 720 and the UE 702. The ANs 708 may be a macrocell base station or a low power base station for providing femtocells, picocells or other like cells having smaller coverage areas, smaller user capacity, or higher bandwidth compared to macrocells; or some combination thereof. In these implementations, an AN 708 be referred to as a BS, gNB, RAN node, eNB, ng-eNB, NodeB, RSU, TRxP, etc.

One example implementation is a "CU/DU split" architecture where the ANs 708 are embodied as a gNB-Central Unit (CU) that is communicatively coupled with one or more gNB-Distributed Units (DUs), where each DU may be communicatively coupled with one or more Radio Units (RUs) (also referred to as RRHs, RRUs, or the like) (see e.g., 3GPP TS 38.401 v16.1.0 (2020-03)). In some implementations, the one or more RUs may be individual RSUs. In some implementations, the CU/DU split may include an ng-eNB-CU and one or more ng-eNB-DUs instead of, or in addition to, the gNB-CU and gNB-DUs, respectively. The ANs 708 employed as the CU may be implemented in a discrete device or as one or more software entities running on server computers as part of, for example, a virtual network including a virtual Base Band Unit (BBU) or BBU pool, cloud RAN (CRAN), Radio Equipment Controller (REC), Radio Cloud Center (RCC), centralized RAN (C-RAN), virtualized RAN (vRAN), and/or the like (although these terms may refer to different implementation concepts). Any other type of architectures, arrangements, and/or configurations can be used.

The plurality of ANs may be coupled with one another via an X2 interface (if the RAN 704 is an LTE RAN or Evolved Universal Terrestrial Radio Access Network (E-UTRAN) 710) or an Xn interface (if the RAN 704 is a NG-RAN 714). The X2/Xn interfaces, which may be separated into control/user plane interfaces in some embodiments, may allow the ANs to communicate information related to handovers, data/context transfers, mobility, load management, interference coordination, etc.

The ANs of the RAN 704 may each manage one or more cells, cell groups, component carriers, etc. to provide the UE 702 with an air interface for network access. The UE 702 may be simultaneously connected with a plurality of cells provided by the same or different ANs 708 of the RAN 704. For example, the UE 702 and RAN 704 may use carrier aggregation to allow the UE 702 to connect with a plurality of component carriers, each corresponding to a Pcell or Scell. In dual connectivity scenarios, a first AN 708 may be a master node that provides an MCG and a second AN 708 may be secondary node that provides an SCG. The first/second ANs 708 may be any combination of eNB, gNB, ng-eNB, etc.

The RAN 704 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 702 or AN 708 may be or act as a roadside unit (RSU), which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 704 may be an E-UTRAN 710 with one or more eNBs 712. The an E-UTRAN 710 provides an LTE air interface (Uu) with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 704 may be an next generation (NG)-RAN 714 with one or more gNB 716 and/or on or more ng-eNB 718. The gNB 716 connects with 5G-enabled UEs 702 using a 5G NR interface. The gNB 716 connects with a 5GC 740 through an NG interface, which includes an N2 interface or an N3 interface. The ng-eNB 718 also connects with the 5GC 740 through an NG interface, but may connect with a UE 702 via the Uu interface. The gNB 716 and the ng-eNB 718 may connect with each other over an Xn interface.

In some embodiments, the NG interface may be split into two parts, an NG user plane (NG-U) interface, which carries traffic data between the nodes of the NG-RAN 714 and a UPF 748 (e.g., N3 interface), and an NG control plane (NG-C) interface, which is a signaling interface between the nodes of the NG-RAN 714 and an AMF 744 (e.g., N2 interface).

The NG-RAN 714 may provide a 5G-NR air interface (which may also be referred to as a Uu interface) with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

The 5G-NR air interface may utilize BWPs for various purposes. For example, BWP can be used for dynamic adaptation of the SCS. For example, the UE 702 can be configured with multiple BWPs where each BWP configuration has a different SCS. When a BWP change is indicated to the UE 702, the SCS of the transmission is changed as well. Another use case example of BWP is related to power saving. In particular, multiple BWPs can be configured for the UE 702 with different amount of frequency resources (e.g., PRBs) to support data transmission under different traffic loading scenarios. A BWP containing a smaller number of PRBs can be used for data transmission with small traffic load while allowing power saving at the UE 702 and in some cases at the gNB 716. A BWP containing a larger number of PRBs can be used for scenarios with higher traffic load.

The RAN 704 is communicatively coupled to CN 720 that includes network elements and/or network functions (NFs) to provide various functions to support data and telecommunications services to customers/subscribers (e.g., UE 702). The components of the CN 720 may be implemented in one physical node or separate physical nodes. In some embodiments, NFV may be utilized to virtualize any or all of the functions provided by the network elements of the CN 720 onto physical compute/storage resources in servers, switches, etc. A logical instantiation of the CN 720 may be referred to as a network slice, and a logical instantiation of a portion of the CN 720 may be referred to as a network sub-slice.

The CN 720 may be an LTE CN 722 (also referred to as an Evolved Packet Core (EPC) 722). The EPC 722 may include MME 724, SGW 726, SGSN 728, HSS 730, PGW 732, and PCRF 734 coupled with one another over interfaces (or "reference points") as shown. The NFs in the EPC 722 are briefly introduced as follows.

The MME 724 implements mobility management functions to track a current location of the UE 702 to facilitate paging, bearer activation/deactivation, handovers, gateway selection, authentication, etc.

The SGW 726 terminates an S1 interface toward the RAN 710 and routes data packets between the RAN 710 and the EPC 722. The SGW 726 may be a local mobility anchor point for inter-RAN node handovers and also may provide an anchor for inter-3GPP mobility. Other responsibilities may include lawful intercept, charging, and some policy enforcement.

The SGSN 728 tracks a location of the UE 702 and performs security functions and access control. The SGSN 728 also performs inter-EPC node signaling for mobility between different RAT networks; PDN and S-GW selection as specified by MME 724; MME 724 selection for handovers; etc. The S3 reference point between the MME 724 and the SGSN 728 enable user and bearer information exchange for inter-3GPP access network mobility in idle/active states.

The HSS 730 includes a database for network users, including subscription-related information to support the network entities' handling of communication sessions. The HSS 730 can provide support for routing/roaming, authentication, authorization, naming/addressing resolution, location dependencies, etc. An S6a reference point between the HSS 730 and the MME 724 may enable transfer of subscription and authentication data for authenticating/authorizing user access to the EPC 720.

The PGW 732 may terminate an SGi interface toward a data network (DN) 736 that may include an application (app)/content server 738. The PGW 732 routes data packets between the EPC 722 and the data network 736. The PGW 732 is communicatively coupled with the SGW 726 by an S5 reference point to facilitate user plane tunneling and tunnel management. The PGW 732 may further include a node for policy enforcement and charging data collection (e.g., PCEF). Additionally, the SGi reference point may communicatively couple the PGW 732 with the same or different data network 736. The PGW 732 may be communicatively coupled with a PCRF 734 via a Gx reference point.

The PCRF 734 is the policy and charging control element of the EPC 722. The PCRF 734 is communicatively coupled to the app/content server 738 to determine appropriate QoS and charging parameters for service flows. The PCRF 732 also provisions associated rules into a PCEF (via Gx reference point) with appropriate TFT and QCI.

The CN 720 may be a 5GC 740 including an AUSF 742, AMF 744, SMF 746, UPF 748, NSSF 750, NEF 752, NRF 754, PCF 756, UDM 758, and AF 760 coupled with one another over various interfaces as shown. The NFs in the 5GC 740 are briefly introduced as follows.

The AUSF 742 stores data for authentication of UE 702 and handle authentication-related functionality. The AUSF 742 may facilitate a common authentication framework for various access types.

The AMF 744 allows other functions of the 5GC 740 to communicate with the UE 702 and the RAN 704 and to subscribe to notifications about mobility events with respect to the UE 702. The AMF 744 is also responsible for registration management (e.g., for registering UE 702), connection management, reachability management, mobility management, lawful interception of AMF-related events, and access authentication and authorization. The AMF 744 provides transport for SM messages between the UE 702 and the SMF 746, and acts as a transparent proxy for routing SM messages. AMF 744 also provides transport for SMS messages between UE 702 and an SMSF. AMF 744 interacts with the AUSF 742 and the UE 702 to perform various security anchor and context management functions. Furthermore, AMF 744 is a termination point of a RAN-CP interface, which includes the N2 reference point between the RAN 704 and the AMF 744. The AMF 744 is also a termination point of NAS (N1) signaling, and performs NAS ciphering and integrity protection.

AMF 744 also supports NAS signaling with the UE 702 over an N3IWF interface. The N3IWF provides access to untrusted entities. N3IWF may be a termination point for the N2 interface between the (R)AN 704 and the AMF 744 for the control plane, and may be a termination point for the N3 reference point between the (R)AN 714 and the 748 for the user plane. As such, the AMF 744 handles N2 signalling from the SMF 746 and the AMF 744 for PDU sessions and QoS, encapsulate/de-encapsulate packets for IPSec and N3 tunnelling, marks N3 user-plane packets in the uplink, and enforces QoS corresponding to N3 packet marking taking into account QoS requirements associated with such marking received over N2. N3IWF may also relay UL and DL control-plane NAS signalling between the UE 702 and AMF 744 via an N1 reference point between the UE 702and the AMF 744, and relay uplink and downlink user-plane packets between the UE 702 and UPF 748. The N3IWF also provides mechanisms for IPsec tunnel establishment with the UE 702. The AMF 744 may exhibit an Namf service-based interface, and may be a termination point for an N14 reference point between two AMFs 744 and an N17 reference point between the AMF 744 and a 5G-EIR (not shown by FIG. 7).

The SMF 746 is responsible for SM (e.g., session establishment, tunnel management between UPF 748 and AN 708); UE IP address allocation and management (including optional authorization); selection and control of UP function; configuring traffic steering at UPF 748 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 744 over N2 to AN 708; and determining SSC mode of a session. SM refers to management of a PDU session, and a PDU session or "session" refers to a PDU connectivity service that provides or enables the exchange of PDUs between the UE 702 and the DN 736.

The UPF 748 acts as an anchor point for intra-RAT and inter-RAT mobility, an external PDU session point of interconnect to data network 736, and a branching point to support multi-homed PDU session. The UPF 748 also performs packet routing and forwarding, packet inspection, enforces user plane part of policy rules, lawfully intercept packets (UP collection), performs traffic usage reporting, perform QoS handling for a user plane (e.g., packet filtering, gating, UL/DL rate enforcement), performs uplink traffic verification (e.g., SDF-to-QoS flow mapping), transport level packet marking in the uplink and downlink, and performs downlink packet buffering and downlink data notification triggering. UPF 748 may include an uplink classifier to support routing traffic flows to a data network.

The NSSF 750 selects a set of network slice instances serving the UE 702. The NSSF 750 also determines allowed NSSAI and the mapping to the subscribed S-NSSAIs, if needed. The NSSF 750 also determines an AMF set to be used to serve the UE 702, or a list of candidate AMFs 744 based on a suitable configuration and possibly by querying the NRF 754. The selection of a set of network slice instances for the UE 702 may be triggered by the AMF 744 with which the UE 702 is registered by interacting with the NSSF 750; this may lead to a change of AMF 744. The NSSF 750 interacts with the AMF 744 via an N22 reference point; and may communicate with another NSSF in a visited network via an N31 reference point (not shown).

The NEF 752 securely exposes services and capabilities provided by 3GPP NFs for third party, internal exposure/re-exposure, AFs 760, edge computing or fog computing systems (e.g., edge compute node, etc. In such embodiments, the NEF 752 may authenticate, authorize, or throttle the AFs. NEF 752 may also translate information exchanged with the AF 760 and information exchanged with internal network functions. For example, the NEF 752 may translate between an AF-Service-Identifier and an internal 5GC information. NEF 752 may also receive information from other NFs based on exposed capabilities of other NFs. This information may be stored at the NEF 752 as structured data, or at a data storage NF using standardized interfaces. The stored information can then be reexposed by the NEF 752 to other NFs and AFs, or used for other purposes such as analytics.

The NRF 754 supports service discovery functions, receives NF discovery requests from NF instances, and provides information of the discovered NF instances to the requesting NF instances. NRF 754 also maintains information of available NF instances and their supported services. The NRF 754 also supports service discovery functions, wherein the NRF 754 receives NF Discovery Request from NF instance or an SCP (not shown), and provides information of the discovered NF instances to the NF instance or SCP.

The PCF 756 provides policy rules to control plane functions to enforce them, and may also support unified policy framework to govern network behavior. The PCF 756 may also implement a front end to access subscription information relevant for policy decisions in a UDR of the UDM 758. In addition to communicating with functions over reference points as shown, the PCF 756 exhibit an Npcf service-based interface.

The UDM 758 handles subscription-related information to support the network entities' handling of communication sessions, and stores subscription data of UE 702. For example, subscription data may be communicated via an N8 reference point between the UDM 758 and the AMF 744. The UDM 758 may include two parts, an application front end and a UDR. The UDR may store subscription data and policy data for the UDM 758 and the PCF 756, and/or structured data for exposure and application data (including PFDs for application detection, application request information for multiple UEs 702) for the NEF 752. The Nudr service-based interface may be exhibited by the UDR 221 to allow the UDM 758, PCF 756, and NEF 752 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 758 may exhibit the Nudm service-based interface.

AF 760 provides application influence on traffic routing, provide access to NEF 752, and interact with the policy framework for policy control. The AF 760 may influence UPF 748 (re)selection and traffic routing. Based on operator deployment, when AF 760 is considered to be a trusted entity, the network operator may permit AF 760 to interact directly with relevant NFs. Additionally, the AF 760 may be used for edge computing implementations.

The 5GC 740 may enable edge computing by selecting operator/3rd party services to be geographically close to a point that the UE 702 is attached to the network. This may reduce latency and load on the network. In edge computing implementations, the 5GC 740 may select a UPF 748 close to the UE 702 and execute traffic steering from the UPF 748 to DN 736 via the N6 interface. This may be based on the UE subscription data, UE location, and information provided by the AF 760, which allows the AF 760 to influence UPF (re)selection and traffic routing.

The data network (DN) 736 may represent various network operator services, Internet access, or third party services that may be provided by one or more servers including, for example, application (app)/content server 738. The DN 736 may be an operator external public, a private PDN, or an intra-operator packet data network, for example, for provision of IMS services. In this embodiment, the app server 738 can be coupled to an IMS via an S-CSCF or the I-CSCF. In some implementations, the DN 736 may represent one or more local area DNs (LADNs), which are DNs 736 (or DN names (DNNs)) that is/are accessible by a UE 702 in one or more specific areas. Outside of these specific areas, the UE 702 is not able to access the LADN/DN 736.

Additionally or alternatively, the DN 736 may be an Edge DN 736, which is a (local) Data Network that supports the architecture for enabling edge applications. In these embodiments, the app server 738 may represent the physical hardware systems/devices providing app server functionality and/or the application software resident in the cloud or at an edge compute node that performs server function(s). In some embodiments, the app/content server 738 provides an edge hosting environment that provides support required for Edge Application Server's execution.

In some embodiments, the 5GS can use one or more edge compute nodes to provide an interface and offload processing of wireless communication traffic. In these embodiments, the edge compute nodes may be included in, or co-located with one or more RAN710, 714. For example, the edge compute nodes can provide a connection between the RAN 714 and UPF 748 in the 5GC 740. The edge compute nodes can use one or more NFV instances instantiated on virtualization infrastructure within the edge compute nodes to process wireless connections to and from the RAN 714 and UPF 748.

The interfaces of the 5GC 740 include reference points and service-based itnterfaces. The reference points include: N1 (between the UE 702 and the AMF 744), N2 (between RAN 714 and AMF 744), N3 (between RAN 714 and UPF 748), N4 (between the SMF 746 and UPF 748), N5 (between PCF 756 and AF 760), N6 (between UPF 748 and DN 736), N7 (between SMF 746 and PCF 756), N8 (between UDM 758 and AMF 744), N9 (between two UPFs 748), N10 (between the UDM 758 and the SMF 746), N11 (between the AMF 744 and the SMF 746), N12 (between AUSF 742 and AMF 744), N13 (between AUSF 742 and UDM 758), N14 (between two AMFs 744; not shown), N15 (between PCF 756 and AMF 744 in case of a non-roaming scenario, or between the PCF 756 in a visited network and AMF 744 in case of a roaming scenario), N16 (between two SMFs 746; not shown), and N22 (between AMF 744 and NSSF 750). Other reference point representations not shown in FIG. 7 can also be used. The service-based representation of FIG. 7 represents NFs within the control plane that enable other authorized NFs to access their services. The service-based interfaces (SBIs) include: Namf (SBI exhibited by AMF 744), Nsmf (SBI exhibited by SMF 746), Nnef (SBI exhibited by NEF 752), Npcf (SBI exhibited by PCF 756), Nudm (SBI exhibited by the UDM 758), Naf (SBI exhibited by AF 760), Nnrf (SBI exhibited by NRF 754), Nnssf (SBI exhibited by NSSF 750), Nausf (SBI exhibited by AUSF 742). Other service-based interfaces (e.g., Nudr, N5g-eir, and Nudsf) not shown in FIG. 7 can also be used. In some embodiments, the NEF 752 can provide an interface to edge compute nodes 736x, which can be used to process wireless connections with the RAN 714.In some implementations, the system 700 may include an SMSF, which is responsible for SMS subscription checking and verification, and relaying SM messages to/from the UE 702 to/from other entities, such as an SMS-GMSC/IWMSC/SMS-router. The SMS may also interact with AMF 744 and UDM 758 for a notification procedure that the UE 702 is available for SMS transfer (e.g., set a UE not reachable flag, and notifying UDM 758 when UE 702 is available for SMS).

The 5GS may also include an SCP (or individual instances of the SCP) that supports indirect communication (see e.g., 3GPP TS 23.501 section 7.1.1); delegated discovery (see e.g., 3GPP TS 23.501 section 7.1.1); message forwarding and routing to destination NF/NF service(s), communication security (e.g., authorization of the NF Service Consumer to access the NF Service Producer API) (see e.g., 3GPP TS 33.501), load balancing, monitoring, overload control, etc.; and discovery and selection functionality for UDM(s), AUSF(s), UDR(s), PCF(s) with access to subscription data stored in the UDR based on UE's SUPI, SUCI or GPSI (see e.g., 3GPP TS 23.501 section 6.3). Load balancing, monitoring, overload control functionality provided by the SCP may be implementation specific. The SCP may be deployed in a distributed manner. More than one SCP can be present in the communication path between various NF Services. The SCP, although not an NF instance, can also be deployed distributed, redundant, and scalable.

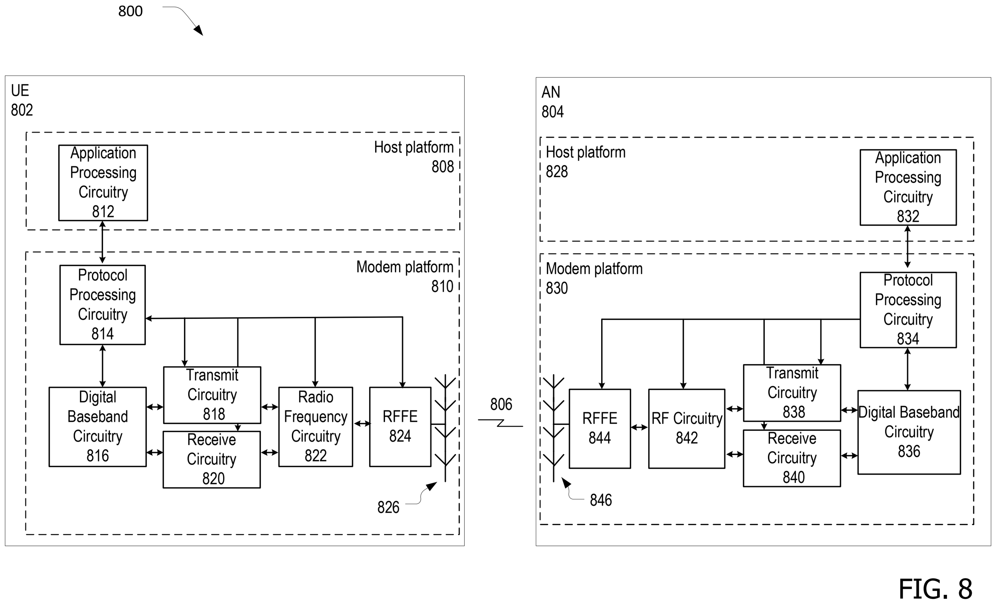

FIG. 8 schematically illustrates a wireless network 800 in accordance with various embodiments. The wireless network 800 may include a UE 802 in wireless communication with an AN 804. The UE 802 and AN 804 may be similar to, and substantially interchangeable with, like-named components described with respect to FIG. 7.

The UE 802 may be communicatively coupled with the AN 804 via connection 806. The connection 806 is illustrated as an air interface to enable communicative coupling, and can be consistent with cellular communications protocols such as an LTE protocol or a 5G NR protocol operating at mmWave or sub-6GHz frequencies.

The UE 802 may include a host platform 808 coupled with a modem platform 810. The host platform 808 may include application processing circuitry 812, which may be coupled with protocol processing circuitry 814 of the modem platform 810. The application processing circuitry 812 may run various applications for the UE 802 that source/sink application data. The application processing circuitry 812 may further implement one or more layer operations to transmit/receive application data to/from a data network. These layer operations may include transport (for example UDP) and Internet (for example, IP) operations.

The protocol processing circuitry 814 may implement one or more of layer operations to facilitate transmission or reception of data over the connection 806. The layer operations implemented by the protocol processing circuitry 814 may include, for example, MAC, RLC, PDCP, RRC and NAS operations.

The modem platform 810 may further include digital baseband circuitry 816 that may implement one or more layer operations that are "below" layer operations performed by the protocol processing circuitry 814 in a network protocol stack. These operations may include, for example, PHY operations including one or more of HARQ acknowledgement (ACK) functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 810 may further include transmit circuitry 818, receive circuitry 820, RF circuitry 822, and RF front end (RFFE) 824, which may include or connect to one or more antenna panels 826. Briefly, the transmit circuitry 818 may include a digital-to-analog converter, mixer, intermediate frequency (IF) components, etc.; the receive circuitry 820 may include an analog-to-digital converter, mixer, IF components, etc.; the RF circuitry 822 may include a low-noise amplifier, a power amplifier, power tracking components, etc.; RFFE 824 may include filters (for example, surface/bulk acoustic wave filters), switches, antenna tuners, beamforming components (for example, phase-array antenna components), etc. The selection and arrangement of the components of the transmit circuitry 818, receive circuitry 820, RF circuitry 822, RFFE 824, and antenna panels 826 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 814 may include one or more instances of control circuitry (not shown) to provide control functions for the transmit/receive components.

A UE 802 reception may be established by and via the antenna panels 826, RFFE 824, RF circuitry 822, receive circuitry 820, digital baseband circuitry 816, and protocol processing circuitry 814. In some embodiments, the antenna panels 826 may receive a transmission from the AN 804 by receive-beamforming signals received by a plurality of antennas/antenna elements of the one or more antenna panels 826.

A UE 802 transmission may be established by and via the protocol processing circuitry 814, digital baseband circuitry 816, transmit circuitry 818, RF circuitry 822, RFFE 824, and antenna panels 826. In some embodiments, the transmit components of the UE 804 may apply a spatial filter to the data to be transmitted to form a transmit beam emitted by the antenna elements of the antenna panels 826.

Similar to the UE 802, the AN 804 may include a host platform 828 coupled with a modem platform 830. The host platform 828 may include application processing circuitry 832 coupled with protocol processing circuitry 834 of the modem platform 830. The modem platform may further include digital baseband circuitry 836, transmit circuitry 838, receive circuitry 840, RF circuitry 842, RFFE circuitry 844, and antenna panels 846. The components of the AN 804 may be similar to and substantially interchangeable with like-named components of the UE 802. In addition to performing data transmission/reception as described above, the components of the AN 808 may perform various logical functions that include, for example, RNC functions such as radio bearer management, uplink and downlink dynamic radio resource management, and data packet scheduling.

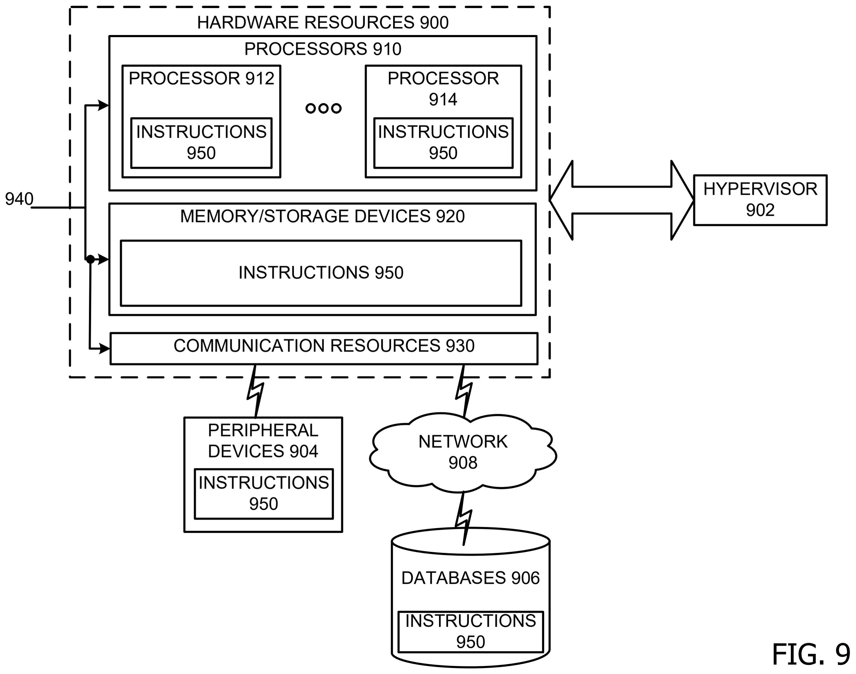

FIG. 9 illustrates components of a computing device 900 according to some example embodiments, able to read instructions from a machine-readable or computer-readable medium (e.g., a non-transitory machine-readable storage medium) and perform any one or more of the methodologies discussed herein. Specifically, FIG. 9 shows a diagrammatic representation of hardware resources 901 including one or more processors (or processor cores) 910, one or more memory/storage devices 920, and one or more communication resources 930, each of which may be communicatively coupled via a bus 940 or other interface circuitry. For embodiments where node virtualization (e.g., NFV) is utilized, a hypervisor 902 may be executed to provide an execution environment for one or more network slices/sub-slices to utilize the hardware resources 901.

The processors 910 include, for example, processor 912 and processor 914. The processors 910 include circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. The processors 910 may be, for example, a central processing unit (CPU), reduced instruction set computing (RISC) processors, Acorn RISC Machine (ARM) processors, complex instruction set computing (CISC) processors, graphics processing units (GPUs), one or more Digital Signal Processors (DSPs) such as a baseband processor, Application-Specific Integrated Circuits (ASICs), an Field-Programmable Gate Array (FPGA), a radio-frequency integrated circuit (RFIC), one or more microprocessors or controllers, another processor (including those discussed herein), or any suitable combination thereof. In some implementations, the processor circuitry 910 may include one or more hardware accelerators, which may be microprocessors, programmable processing devices (e.g., FPGA, complex programmable logic devices (CPLDs), etc.), or the like.

The memory/storage devices 920 may include main memory, disk storage, or any suitable combination thereof. The memory/storage devices 920 may include, but are not limited to, any type of volatile, non-volatile, or semi-volatile memory such as random access memory (RAM), dynamic RAM (DRAM), static RAM (SRAM), synchronous DRAM (SDRAM), erasable programmable read-only memory (EPROM), electrically erasable programmable read-only memory (EEPROM), Flash memory, solid-state storage, phase change RAM (PRAM), resistive memory such as magnetoresistive random access memory (MRAM), etc., and may incorporate three-dimensional (3D) cross-point (XPOINT) memories from Intel^{®} and Micron^{®}. The memory/storage devices 920 may also comprise persistent storage devices, which may be temporal and/or persistent storage of any type, including, but not limited to, non-volatile memory, optical, magnetic, and/or solid state mass storage, and so forth.

The communication resources 930 may include interconnection or network interface controllers, components, or other suitable devices to communicate with one or more peripheral devices 904 or one or more databases 906 or other network elements via a network 908. For example, the communication resources 930 may include wired communication components (e.g., for coupling via USB, Ethernet, Ethernet, Ethernet over GRE Tunnels, Ethernet over Multiprotocol Label Switching (MPLS), Ethernet over USB, Controller Area Network (CAN), Local Interconnect Network (LIN), DeviceNet, ControlNet, Data Highway+, PROFIBUS, or PROFINET, among many others), cellular communication components, NFC components, Bluetooth^{®} (or Bluetooth^{®} Low Energy) components, WiFi^{®} components, and other communication components. Network connectivity may be provided to/from the computing device 900 via the communication resources 930 using a physical connection, which may be electrical (e.g., a "copper interconnect") or optical. The physical connection also includes suitable input connectors (e.g., ports, receptacles, sockets, etc.) and output connectors (e.g., plugs, pins, etc.). The communication resources 930 may include one or more dedicated processors and/or FPGAs to communicate using one or more of the aforementioned network interface protocols.

Instructions 950 may comprise software, a program, an application, an applet, an app, or other executable code for causing at least any of the processors 910 to perform any one or more of the methodologies discussed herein. The instructions 950 may reside, completely or partially, within at least one of the processors 910 (e.g., within the processor's cache memory), the memory/storage devices 920, or any suitable combination thereof. Furthermore, any portion of the instructions 950 may be transferred to the hardware resources 901 from any combination of the peripheral devices 904 or the databases 906. Accordingly, the memory of processors 910, the memory/storage devices 920, the peripheral devices 904, and the databases 906 are examples of computer-readable and machine-readable media.

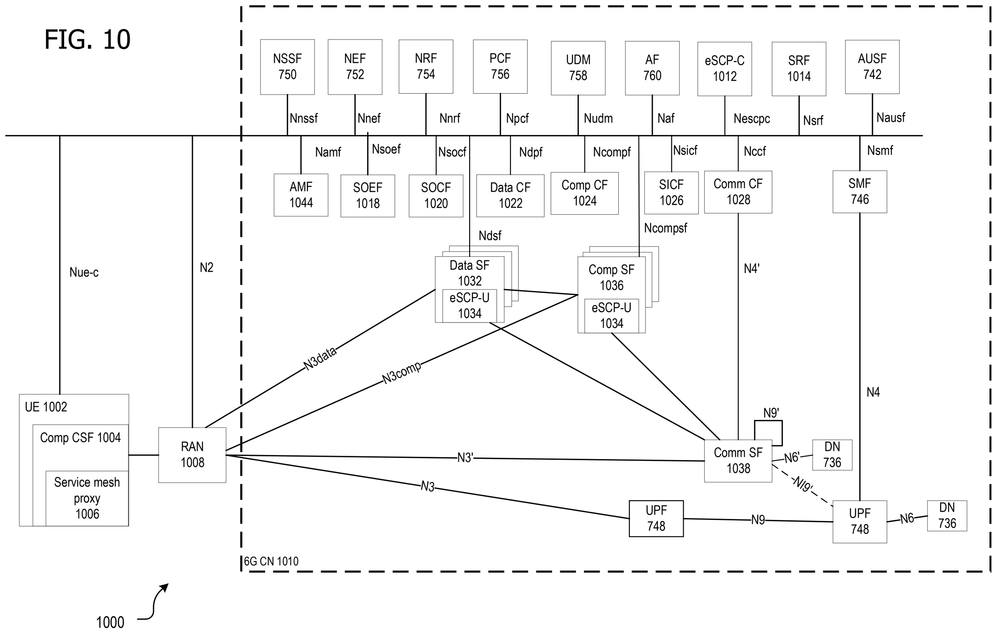

FIG. 10 illustrates a network 1000 in accordance with various embodiments. The network 1000 may operate in a matter consistent with 3GPP technical specifications or technical reports for 6G systems. In some embodiments, the network 1000 may operate concurrently with network 700. For example, in some embodiments, the network 1000 may share one or more frequency or bandwidth resources with network 700. As one specific example, a UE (e.g., UE 1002) may be configured to operate in both network 1000 and network 700. Such configuration may be based on a UE including circuitry configured for communication with frequency and bandwidth resources of both networks 700 and 1000. In general, several elements of network 1000 may share one or more characteristics with elements of network 700. For the sake of brevity and clarity, such elements may not be repeated in the description of network 1000.

The network 1000 may include a UE 1002, which may include any mobile or non-mobile computing device designed to communicate with a RAN 1008 via an over-the-air connection. The UE 1002 may be similar to, for example, UE 702. The UE 1002 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

Although not specifically shown in FIG. 10, in some embodiments the network 1000 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. Similarly, although not specifically shown in FIG. 10, the UE 1002 may be communicatively coupled with an AP such as AP 706 as described with respect to FIG. 7. Additionally, although not specifically shown in FIG. 10, in some embodiments the RAN 1008 may include one or more ANss such as AN 708 as described with respect to FIG. 7. The RAN 1008 and/or the AN of the RAN 1008 may be referred to as a base station (BS), a RAN node, or using some other term or name.

The UE 1002 and the RAN 1008 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 1008 may allow for communication between the UE 1002 and a 6G core network (CN) 1010. Specifically, the RAN 1008 may facilitate the transmission and reception of data between the UE 1002 and the 6G CN 1010. The 6G CN 1010 may include various functions such as NSSF 750, NEF 752, NRF 754, PCF 756, UDM 758, AF 760, SMF 746, and AUSF 742. The 6G CN 1010 may additional include UPF 748 and DN 736 as shown in FIG. 10.

Additionally, the RAN 1008 may include various additional functions that are in addition to, or alternative to, functions of a legacy cellular network such as a 4G or 5G network. Two such functions may include a Compute Control Function (Comp CF) 1024 and a Compute Service Function (Comp SF) 1036. The Comp CF 1024 and the Comp SF 1036 may be parts or functions of the Computing Service Plane. Comp CF 1024 may be a control plane function that provides functionalities such as management of the Comp SF 1036, computing task context generation and management (e.g., create, read, modify, delete), interaction with the underlaying computing infrastructure for computing resource management, etc.. Comp SF 1036 may be a user plane function that serves as the gateway to interface computing service users (such as UE 1002) and computing nodes behind a Comp SF instance. Some functionalities of the Comp SF 1036 may include: parse computing service data received from users to compute tasks executable by computing nodes; hold service mesh ingress gateway or service API gateway; service and charging policies enforcement; performance monitoring and telemetry collection, etc. In some embodiments, a Comp SF 1036 instance may serve as the user plane gateway for a cluster of computing nodes. A Comp CF 1024 instance may control one or more Comp SF 1036 instances.

Two other such functions may include a Communication Control Function (Comm CF) 1028 and a Communication Service Function (Comm SF) 1038, which may be parts of the Communication Service Plane. The Comm CF 1028 may be the control plane function for managing the Comm SF 1038, communication sessions creation/configuration/releasing, and managing communication session context. The Comm SF 1038 may be a user plane function for data transport. Comm CF 1028 and Comm SF 1038 may be considered as upgrades of SMF 746 and UPF 748, which were described with respect to a 5G system in FIG. 7. The upgrades provided by the Comm CF 1028 and the Comm SF 1038 may enable service-aware transport. For legacy (e.g., 4G or 5G) data transport, SMF 746 and UPF 748 may still be used.

Two other such functions may include a Data Control Function (Data CF) 1022 and Data Service Function (Data SF) 1032 may be parts of the Data Service Plane. Data CF 1022 may be a control plane function and provides functionalities such as Data SF 1032 management, Data service creation/configuration/releasing, Data service context management, etc. Data SF 1032 may be a user plane function and serve as the gateway between data service users (such as UE 1002 and the various functions of the 6G CN 1010) and data service endpoints behind the gateway. Specific functionalities may include include: parse data service user data and forward to corresponding data service endpoints, generate charging data, report data service status.

Another such function may be the Service Orchestration and Chaining Function (SOCF) 1020, which may discover, orchestrate and chain up communication/computing/data services provided by functions in the network. Upon receiving service requests from users, SOCF 1020 may interact with one or more of Comp CF 1024, Comm CF 1028, and Data CF 1022 to identify Comp SF 1036, Comm SF 1038, and Data SF 1032 instances, configure service resources, and generate the service chain, which could contain multiple Comp SF 1036, Comm SF 1038, and Data SF 1032 instances and their associated computing endpoints. Workload processing and data movement may then be conducted within the generated service chain. The SOCF 1020 may also responsible for maintaining, updating, and releasing a created service chain.

Another such function may be the service registration function (SRF) 1014, which may act as a registry for system services provided in the user plane such as services provided by service endpoints behind Comp SF 1036 and Data SF 1032 gateways and services provided by the UE 1002. The SRF 1014 may be considered a counterpart of NRF 754, which may act as the registry for network functions.

Other such functions may include an evolved service communication proxy (eSCP) and service infrastructure control function (SICF) 1026, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 1012 and eSCP-U 1034, for control plane service communication proxy and user plane service communication proxy, respectively. The SICF 1026 may control and configure eCSP instances in terms of service traffic routing policies, access rules, load balancing configurations, performance monitoring, etc.

Another such function is the AMF 1044. The AMF 1044 may be similar to 744, but with additional functionality. Specifically, the AMF 1044 may include potential functional repartition, such as move the message forwarding functionality from the AMF 1044 to the RAN 1008.

Another such function is the service orchestration exposure function (SOEF) 1018. The SOEF may be configured to expose service orchestration and chaining services to external users such as applications.

The UE 1002 may include an additional function that is referred to as a computing client service function (comp CSF) 1004. The comp CSF 1004 may have both the control plane functionalities and user plane functionalities, and may interact with corresponding network side functions such as SOCF 1020, Comp CF 1024, Comp SF 1036, Data CF 1022, and/or Data SF 1032 for service discovery, request/response, compute task workload exchange, etc. The Comp CSF 1004 may also work with network side functions to decide on whether a computing task should be run on the UE 1002, the RAN 1008, and/or an element of the 6G CN 1010.

The UE 1002 and/or the Comp CSF 1004 may include a service mesh proxy 1006. The service mesh proxy 1006 may act as a proxy for service-to-service communication in the user plane. Capabilities of the service mesh proxy 1006 may include one or more of addressing, security, load balancing, etc.

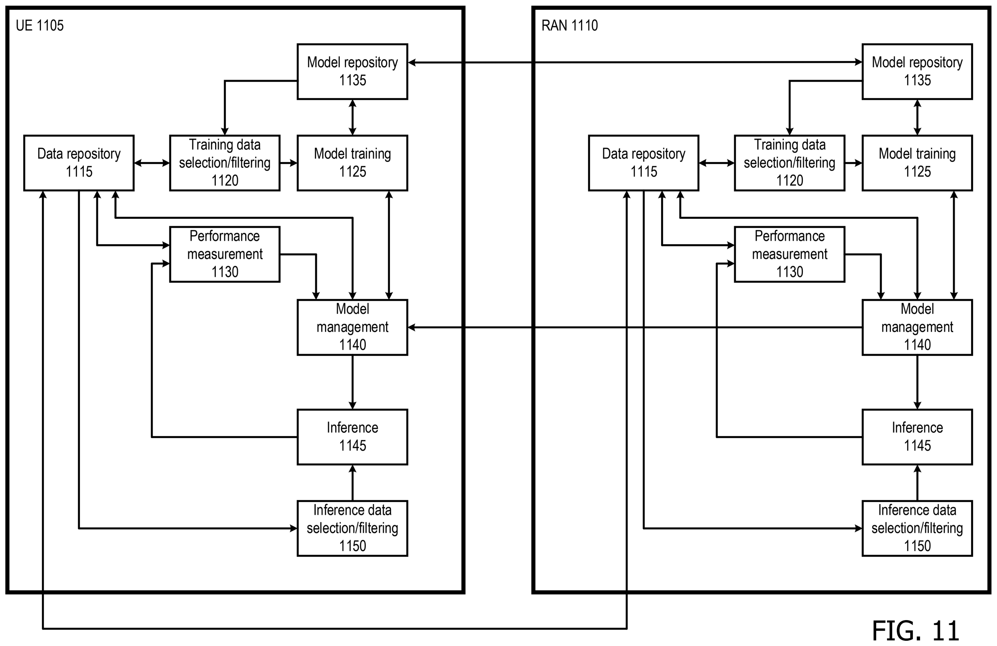

FIG. 11 illustrates a simplified block diagram of artificial (AI)-assisted communication between a UE 1105 and a RAN 1110, in accordance with various embodiments. More specifically, as described in further detail below, AI/machine learning (ML) models may be used or leveraged to facilitate over-the-air communication between UE 1105 and RAN 1110.

One or both of the UE 1105 and the RAN 1110 may operate in a matter consistent with 3GPP technical specifications or technical reports for 6G systems. In some embodiments, the wireless cellular communication between the UE 1105 and the RAN 1110 may be part of, or operate concurrently with, networks 1000, 700, and/or some other network described herein.

The UE 1105 may be similar to, and share one or more features with, UE 1002, UE 702, and/or some other UE described herein. The UE 1105 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc. The RAN 1110 may be similar to, and share one or more features with, RAN 714, RAN 1008, and/or some other RAN described herein.

As may be seen in FIG. 11, the AI-related elements of UE 1105 may be similar to the AI-related elements of RAN 1110. For the sake of discussion herein, description of the various elements will be provided from the point of view of the UE 1105, however it will be understood that such discussion or description will apply to equally named/numbered elements of RAN 1110, unless explicitly stated otherwise.

As previously noted, the UE 1105 may include various elements or functions that are related to AI/ML. Such elements may be implemented as hardware, software, firmware, and/or some combination thereof. In embodiments, one or more of the elements may be implemented as part of the same hardware (e.g., chip or multi-processor chip), software (e.g., a computing program), or firmware as another element.

One such element may be a data repository 1115. The data repository 1115 may be responsible for data collection and storage. Specifically, the data repository 1115 may collect and store RAN configuration parameters, measurement data, performance key performance indicators (KPIs), model performance metrics, etc., for model training, update, and inference. More generally, collected data is stored into the repository. Stored data can be discovered and extracted by other elements from the data repository 1115. For example, as may be seen, the inference data selection/filter element 1150 may retrieve data from the data repository 1115. In various embodiments, the UE 1105 may be configured to discover and request data from the data repository 1115 in the RAN, and vice versa. More generally, the data repository 1115 of the UE 1105 may be communicatively coupled with the data repository 1115 of the RAN 1110 such that the respective data repositories of the UE and the RAN may share collected data with one another.

Another such element may be a training data selection/filtering functional block 1120. The training data selection/filter functional block 1120 may be configured to generate training, validation, and testing datasets for model training. Training data may be extracted from the data repository 1115. Data may be selected/filtered based on the specific AI/ML model to be trained. Data may optionally be transformed/augmented/pre-processed (e.g., normalized) before being loaded into datasets. The training data selection/filter functional block 1120 may label data in datasets for supervised learning. The produced datasets may then be fed into model training the model training functional block 1125.

As noted above, another such element may be the model training functional block 1125. This functional block may be responsible for training and updating(re-training) AI/ML models. The selected model may be trained using the fed-in datasets (including training, validation, testing) from the training data selection/filtering functional block. The model training functional block 1125 may produce trained and tested AI/ML models which are ready for deployment. The produced trained and tested models can be stored in a model repository 1135.

The model repository 1135 may be responsible for AI/ML models' (both trained and un-trained) storage and exposure. Trained/updated model(s) may be stored into the model repository 1135. Model and model parameters may be discovered and requested by other functional blocks (e.g., the training data selection/filter functional block 1120 and/or the model training functional block 1125). In some embodiments, the UE 1105 may discover and request AI/ML models from the model repository 1135 of the RAN 1110. Similarly, the RAN 1110 may be able to discover and/or request AI/ML models from the model repository 1135 of the UE 1105. In some embodiments, the RAN 1110 may configure models and/or model parameters in the model repository 1135 of the UE 1105.

Another such element may be a model management functional block 1140. The model management functional block 1140 may be responsible for management of the AI/ML model produced by the model training functional block 1125. Such management functions may include deployment of a trained model, monitoring model performance, etc. In model deployment, the model management functional block 1140 may allocate and schedule hardware and/or software resources for inference, based on received trained and tested models. As used herein, "inference" refers to the process of using trained AI/ML model(s) to generate data analytics, actions, policies, etc. based on input inference data. In performance monitoring, based on wireless performance KPIs and model performance metrics, the model management functional block 1140 may decide to terminate the running model, start model re-training, select another model, etc. In embodiments, the model management functional block 1140 of the RAN 1110 may be able to configure model management policies in the UE 1105 as shown.

Another such element may be an inference data selection/filtering functional block 1150. The inference data selection/filter functional block 1150 may be responsible for generating datasets for model inference at the inference functional block 1145, as described below. Specifically, inference data may be extracted from the data repository 1115. The inference data selection/filter functional block 1150 may select and/or filter the data based on the deployed AI/ML model. Data may be transformed/augmented/pre-processed following the same transformation/augmentation/pre-processing as those in training data selection/filtering as described with respect to functional block 1120. The produced inference dataset may be fed into the inference functional block 1145.

Another such element may be the inference functional block 1145. The inference functional block 1145 may be responsible for executing inference as described above. Specifically, the inference functional block 1145 may consume the inference dataset provided by the inference data selection/filtering functional block 1150, and generate one or more outcomes. Such outcomes may be or include data analytics, actions, policies, etc. The outcome(s) may be provided to the performance measurement functional block 1130.

The performance measurement functional block 1130 may be configured to measure model performance metrics (e.g., accuracy, model bias, run-time latency, etc.) of deployed and executing models based on the inference outcome(s) for monitoring purpose. Model performance data may be stored in the data repository 1115.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc., as described above in connection with one or more of the preceding figures may be configured to operate in accordance with one or more of the examples set forth below in the example section.

Additional examples of the presently described embodiments include the following, non-limiting implementations. Each of the following non-limiting examples may stand on its own or may be combined in any permutation or combination with any one or more of the other examples provided below or throughout the present disclosure.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below.

The following examples pertain to further embodiments.

Example 1 may include a system and/or method of wireless communication for unified data architecture in 6GS with new network data functions DRF(Data Repository Function), DPF (Data Processing Function), UDOF(Unified Data Orchestration function), FSR(Federated Service Registry), DSVF (Data Security and Validation Function), DA (Data Agent) CR(Consent Repository) introduced supported via service based interface between the network data function.

Example 2 may include the method of example 1 and/or some other example(s) herein, wherein the DRF stores the collected raw data or transformed data and multiple instances of DRF may be supported in a 6G operator network in the RAN, 6GC, 6G OAM based on the deployment and operational needs of the 6G network.

Example 3 may include the method of example 2 and/or some other example(s) herein, wherein ADRF defined in 5GC may subsume the role of DRF.

Example 4 may include the method of example 1 and/or some other example(s) herein, wherein DPF may be responsible for transforming and manipulating the data according to predefined rules and logic and the collected raw data may be cleansed, mapped and transformed into format required to meet the operational needs of the 6G network.

Example 5 may include the method of example 1 and/or some other example(s) herein, wherein UDOF may be the first point of entry for the Data collection service consumer and may be responsible to orchestrates end-to-end data management pipeline.

Example 6 may include the method of example 1 and/or some other example(s) herein, wherein FSR holds metadata for DSFs/DPFs/DSRFs; peers with registries in other domains to enable cross-operator discovery.

Example 7 may include the method of example 1 and/or some other example(s) herein, wherein DSVF authenticates all of the data management pipeline participants i.e., data providers (UE, NF, AF, sensing entities) , also the data functions or entities that form the data pipeline using X.509 or W3C DID/Verifiable-Credential; verifies message integrity, enforces user-consent and privacy policy, and can anonymize data before exposure, validate the data provider.

Example 8 may include the method of example 1 and/or some other example(s) herein, wherein DA may be responsible for using domain knowledge to transform data to meet service operational needs. DA may interface with AI agents to complete parts of a complex AI operational task or maybe a sub-component of an AI agent. DA instances may register with the FSR as stateless 'Function-as-a-Service' elements, enabling DOF to chain them at runtime.

Example 9 may include the method of example 1 and/or some other example(s) herein, wherein CR may be a logical function that could extend UDM and stores OAuth 2.0 / RNAA tokens or user VC proofs; queried by DSVF during policy checks.

Example 10 may include the method of example 1 to 9 and/or some other example(s) herein, wherein are network entities UDOF, FSR, Data Broker, DPF, DSVF, DRF/ADRF are instances in 6G Core Network.

Example 11 may include the method of example 10 and/or some other example(s) herein, wherein UDOF exposes north-bound CAPIF APIs so external AFs can request pipeline creation. UDOF consults the FSR for available DRF/DPF assets and instructs the Broker to instantiate topics.

Example 12 may include the method of example 10 and/or some other example(s) herein, wherein the data management pipeline required for data collection and exposure may be established by the 6G Core Network.

Example 13 may include the method of example 12 and/or some other example(s) herein, wherein the UDOF receives a data collection request for a given service, the UDOF based on the incoming request may be responsible for creation of a data pipeline with the appropriate network functions/entities, maintaining the data pipeline for the entire life of the required data collection service, and termination of the data pipeline once the data collection for the incoming service may be completed.

Example 14 may include the method of example 13 and/or some other example(s) herein, wherein depending on the data collection and processing required for a given service the UDOF initiates the subscription/notification with the data providers (UE, RAN, OAM, other network functions within the 6G core network, AF).

Example 15 may include the method of example 10 and/or some other example(s) herein,11, wherein the UDOF issues pub/sub-topic grants on the Broker. DSVF attaches policy filters before any message reaches a subscribe.

Example 16 may include the method of example 10 and/or some other example(s) herein,12,13, wherein the data management pipeline may be requested for data collection to cater to AI/ML service for ML model inference/training, the model training and inference function may be present in 6G core network.

Example 17 may include the method of example 10 and/or some other example(s) herein,16, when data collection in 6G core network may be initiated by a 3rd party application entity to cater to an AI/ML service or Sensing service, the network data collected may be exposed to the 3rd party application entity via the NEF or an equivalent 6G network function.

Example 18 may include the method of example 10-17 and/or some other example(s) herein, wherein the claims are applicable to the new network functions described in claim 10 may be applicable to 5GS.

Example 19 may include the method of example 1-9 and/or some other example(s) herein, wherein the network entities UDOF, DRP, DPF, DSVF are in 6G RAN.

Example 20 may include the method of example 19 and/or some other example(s) herein, wherein the data management pipeline required for data collection and exposure may be established by the 6G RAN.

Example 21 may include the method of example 19 and/or some other example(s) herein, wherein the request for data collection and exposure may be sent to UDOF in 6G RAN from the 6G core network and the service request may be triggered by a NF entity within the 6G core network, ML model training/ inference function in the 6G RAN or an external request from AF via the NEF (or an equivalent NF in 6G network).

Example 22 may include the method of example 21 and/or some other example(s) herein, wherein based on the service for which data collected may be required and latency requirement of the service, the compute network function in the 6G core network or an equivalent network function responsible for compute capability tracking or monitoring in the 6G network decides to offload the data collection, storage and computation to the 6G RAN.

Example 23 may include the method of example 19-22 and/or some other example(s) herein, wherein the ML model training/ inference function in 6G OAM may request the data collection from RAN based on which the UDOF in 6G RAN establishes a data management pipeline to fulfil the data collection and processing request from 6G OAM.

Example 24 may include the method of example 23 and/or some other example(s) herein, wherein data collection in RAN may be initiated by 6G OAM to cater to an AI/ML service or Sensing service where the ML model training/ inference/sensing orchestration function may be in 6G OAM.

Example 25 may include the method of example 21 and/or some other example(s) herein, wherein depending on the data collection and processing required for a given service the UDOF initiates the subscription/notification with the data providers (UE, RAN, OAM).

Example 26 may include the method of example 19-22 and/or some other example(s) herein, wherein the data management pipeline may be requested for data collection to cater to AI/ML service for ML model inference/training, the model training and inference function may be present in 6G RAN and the 6G RAN compute capability may be used for ML model training or inference at the edge network.

Example 27 may include the method of example 1-9 and/or some other example(s) herein, wherein the network entities UDOF, DSVF, DPF are in 6G core network and DRP in 6G RAN.

Example 28 may include the method of example 27 and/or some other example(s) herein, wherein data management pipeline required for data collection and exposure may be split between the 6G RAN and 6G core network function, established by the UDOF in the 6G core network, the collected and processed data may be stored at the DRP in the 6G RAN.

Example 29 may include the method of example 28 and/or some other example(s) herein, wherein the service discovery and selection for data network entities between the RAN and core network functions may be performed by the service based N2 interface.

Example 30 may include the method of example 27 and/or some other example(s) herein,28,29, wherein the UDOF receives a data collection request for a given service, the UDOF based on the incoming request may be responsible for creation of a data pipeline with the appropriate network functions/entities, maintaining and storage of the collected data by the data pipeline for the entire life of the required data collection service, and termination of the data pipeline once the data collection for the incoming service may be completed.

Example 31 may include the method of example 28 and/or some other example(s) herein, wherein the data collection request may be triggered by ML model training/ inference/sensing function in the 6G RAN or the ML model training/ inference function in OAM or the ML model training/ inference function in 6G Core network.

Example 32 may include the method of example 31 and/or some other example(s) herein, wherein based on the input data collection request, the UDOF may decide to store the collected data in the DRF in the 6G RAN.

Example 33 may include the method of example 31 and/or some other example(s) herein, wherein data collection in 6G core network may be initiated by a 3rd party application entity to cater to an AI/ML service or Sensing service and the network data collected may be exposed to the 3rd party application entity via the NEF or an equivalent 6G network function.

Example 34 may include the method of example 31 and/or some other example(s) herein, wherein the ML model training may be split between RAN and 6G core network function such as NWDAF and the UDOF may store parts of the collected in DRP in RAN when the AI workload for ML training may be to be processed in 6G RAN and the UDOF may store parts of the collected data in DRP in 6G core network when the AI workload for ML training may be to be processed in 6G core network.

Example 35 may include the method of example 31 and/or some other example(s) herein, 34, wherein the UDOF based on the input request for data collection may assign a DataTag to associate the data storage, locality and retention policy based on which the data might reside or replicate in RAN Edge and 6G core network.

Example 36 may include the method of example 1-9 and/or some other example(s) herein, wherein the data consumer sends Nudof_DataServiceCollection Request/subscribe to the UDOF where the input parameters provided by the data consumer may include - Service ID represents identification of the consumer requesting the data collection, ServiceAttributes provides the data collection service specific attribute list, Indication on whether Data Provider verification may be required,Indication on whether data processing may be required. If yes, DataProcessing Attributes are included.

Example 37 may include the method of example 36 and/or some other example(s) herein, wherein the UDOF based on the input parameters provided by the Data consumer will determine the entities/network function that form the data management pipeline for data collection and exposure.

Example 38 may include the method of example 37 and/or some other example(s) herein, wherein based on the ServiceAttribute list provided, the UDOF determines the list of Data providers (NF instances, OAM, AF, UE).

Example 39 may include the method of example 36 and/or some other example(s) herein, wherein if Data Provider verification may be requested by the data consumer, the UDOF sends the Data Provider verification request to the DSVF and after identifying the candidate data-provider list, the UDOF issues a Data-Provider-Verify request to the DSVF which contains ProviderList { ProviderID, ProviderType, Home-PLMN, ExpectedDataSet, RequiredTrustLevel } for every candidate provider. For UE-based providers, the request also carries the UE's SUPI (or a temporary identifier) and, if available, the UE-side producer-token (JWT) previously issued by the Authorization Function. For AF Data providers, the request carries the provider's X.509 certificate fingerprint.

Example 40 may include the method of example 39 and/or some other example(s) herein, wherein the DSVF performs provider authentication and policy checks, authenticates each provider by executing a mutual-TLS handshake (NF/AF) or an EAP-AKA / GBA challenge (UE), validates the presented credential chain against the operator PKI, if a foreign PLMN issues the credential, the DSVF retrieves the corresponding root certificate and trust policy from the Federated Service Registry and for UE providers DSVF parses the producer-token to extract datasetId and consentId, then queries UDM/Consent-DB to confirm that consent may be active and un-revoked.

Example 41 may include the method of example 39 and 40 and/or some other example(s) herein, wherein upon Data Provider verification complete, the DSVF sends a response to UDOF indicating the Data providers which were successfully verified.

Example 42 may include the method of example 36-41 and/or some other example(s) herein, wherein UDOF checks if data service collection request may be in process for the given Service ID and Service Attribute, the UDOF identifies whether data processing may be required based on the input parameter and if the existing DataFlow path established for the prior request from Data Consumer can be modified to satisfy the requirements of the new data collection request, the UDOF modifies an existing DataFlow path (identified by the DataFlow ID) instead of creating a new DataFlow path for the request.

Example 43 may include the method of example 36 - 41 and/or some other example(s) herein, wherein the UDOF utilizes the NRF to discover the DRF and DPF unless the DRP and DPF information may be available based on local configuration in UDOF. The factors for selection of DPF may include Data formatting and processing capability, data feature scaling capability, data annotation capability.

Example 44 may include the method of example 43 and/or some other example(s) herein, wherein if parts of the data to be collected may be user data, then user consent needs to be verified. If verified the UDOF subscribes to the DSVF (or entity responsible for user consent such as UDM or Consent-DB) to receive any updates to the user consent changes.

Example 45 may include the method of example 43 and/or some other example(s) herein, wherein the UDOF establishes a DataFlow path identified by the DataFlow ID associated with the Service ID, the DataFlow path created in here may be used to establish the event notifications requests from the Data Providers and each Event notification may be tagged with the DataFlowID for further DataManagement by the UDOF.

Example 46 may include the method of example 45 and/or some other example(s) herein, wherein the UDOF invokes the event subscription requests to the Data Providers associated with the DataFlow and when new data may be available at the Data Provider for the event subscribed, the Data Provider sends the event notification response to the UDOF.

Example 47 may include the method of example 46 and/or some other example(s) herein, wherein if data processing may be included in the DataFlow path identified by the DataFlow ID, the UDOF sends the Ndpf_ DataManagement Processing request to the DPF with the DRF ID where the processed data may be to be stored.

Example 48 may include the method of example 47 and/or some other example(s) herein, wherein the DPF performs the data formatting, processing and annotation as per the DataProcessing Attributes.

Example 49 may include the method of example 48 and/or some other example(s) herein, wherein the data collected and processed may be stored in the ADRF with an DataSetTag assigned corresponding to the DataFlow ID for data collection service request.

Example 50 may include the method of example 49 and/or some other example(s) herein, wherein the DRF sends a response back to the DPF that the data may be stored with the DataSetTag.

Example 51 may include the method of example 50 and/or some other example(s) herein, wherein the DPF sends the response with the DataSetTag to UDOF that the data may be processed and stored in the DRF.

Example 52 may include the method of example 46 and/or some other example(s) herein, wherein the UDOF sends the Nadrf_DataManagement_Storage request to the DRF where the event data associated with DataFlow ID are stored.

Example 53 may include the method of example 52 and/or some other example(s) herein, wherein the DRF sends a response to UDOF that the data may be stored with the DataSetTag.

Example 54 may include the method of example 52 and/or some other example(s) herein, wherein if notification may be received from DSVF about change in user consent status , then the UDOF unsubscribes for data collection corresponding to the UE(s) and sends a Ndrf_ DataManagement_Delete message to the DRF.

Example 55 may include the method of example 53 and/or some other example(s) herein, wherein the UDOF sends the Nudof_DataService Collection response to notify the Data Consumer that the data requested for the Data service may be collected and stored in the data repository DRF including the DRF ID.

Example 56 may include the method of example 55 and/or some other example(s) herein, wherein the Data Consumer sends a Nudof_DataFetch request to UDOF including the Service ID parameter and UDOF based on the DataFlow ID associated with the Service ID, sends the Ndrf_DataManagement storage request to the DRF with the DataSetTag, the DRF sends the stored data in the response back to the UDOF which relays the data to the Data Consumer in Nudof_DataFetch response.

Example 57 may include the method of example 36 and/or some other example(s) herein, wherein the data consumer sends Nudof_DataService Unsubscribe message to the UDOF when the data collection for the Service ID may be no longer required.

Example 58 may include the method of example 57 and/or some other example(s) herein, wherein UDOF deletes the Data Flow path established for the data collection requested for the Service ID, all the data function instances associated with the Data Flow ID are released.

Example 59 may include the method of example 58 and/or some other example(s) herein, wherein the UDOF sends the Ndrf_DataManagement_Delete request to the DRF, the request may include the DataTag attribute which the stored data records are associated to and the DRF indicates the result using Ndrf_DataManagement_Delete response service operations.

Example 60 may include a device, the device comprising processing circuitry coupled to storage, the processing circuitry configured to: receive data from a Sixth Generation (6G) network based on a unified data management architecture; process the received data using a Data Processing Function (DPF) to transform the data into a usable format; and transmit the processed data to a Unified Data Orchestration Function (UDOF) for integration and management within the network.

Example 61 may include the device of example 60, wherein a Data Repository Function (DRF) stores collected raw data or transformed data.

Example 62 may include the device of example 60, wherein the Federated Service Registry (FSR) is associated with service discovery and registration.

Example 63 may include the device of example 60, further comprising a transceiver configured to transmit and receive wireless signals.

Example 64 may include the device of example 63, further comprising an antenna coupled to the transceiver to cause to send a frame.

Example 65 may include a non-transitory computer-readable medium storing computer-executable instructions which when executed by one or more processors result in performing operations comprising: receiving data from a Sixth Generation (6G) network based on a unified data management architecture; processing the received data using a Data Processing Function (DPF) to transform the data into a usable format; and transmitting the processed data to a Unified Data Orchestration Function (UDOF) for integration and management within the network.

Example 66 may include the non-transitory computer-readable medium of example 65, wherein a Data Repository Function (DRF) stores collected raw data or transformed data.

Example 67 may include the non-transitory computer-readable medium of example 65, wherein the Federated Service Registry (FSR) is associated with service discovery and registration.

Example 68 may include a method comprising: receiving data from a Sixth Generation (6G) network based on a unified data management architecture; processing the received data using a Data Processing Function (DPF) to transform the data into a usable format; and transmitting the processed data to a Unified Data Orchestration Function (UDOF) for integration and management within the network.

Example 69 may include the method of example 68, wherein a Data Repository Function (DRF) stores collected raw data or transformed data.

Example 70 may include the method of example 68, wherein the Federated Service Registry (FSR) is associated with service discovery and registration.

Example 71 may include an apparatus comprising means for: receiving data from a Sixth Generation (6G) network based on a unified data management architecture; processing the received data using a Data Processing Function (DPF) to transform the data into a usable format; and transmitting the processed data to a Unified Data Orchestration Function (UDOF) for integration and management within the network.

Example 72 may include the apparatus of example 71, wherein a Data Repository Function (DRF) stores collected raw data or transformed data.

Example 73 may include the apparatus of example 71, wherein the Federated Service Registry (FSR) is associated with service discovery and registration.

Example 74 may include a device for a wireless communication network, the device comprising processing circuitry coupled to storage, the processing circuitry is configured to: receive a request for a data collection service from a data consumer; determine, based on the request, network functions to form a data management pipeline, wherein the network functions comprise at least one of a data processing function and/or a data repository function; and establish, for the data collection service, a data flow path identified by a data flow identifier, wherein the data flow path comprises the determined network functions.

Example 75 may include the device of example 74, wherein the request for the data collection service comprises a service identifier representing an identification of the data consumer, and a list of service attributes for the data collection service.

Example 76 may include the device of example 75, wherein the list of service attributes comprises a type of analytics, analytics filter information, and a time period over which data collection is requested.

Example 77 may include the device of example 75 or 76, wherein the request for the data collection service further comprises an indication on whether data processing is required, and wherein, if data processing is required, the request comprises data processing attributes comprising at least one of data feature imputation, feature scaling normalization, standardization, discretization, one-hot encoding, or data formatting and processing instructions.

Example 78 may include the device of any one of examples 74 to 77, wherein the processing circuitry is further configured to: determine a list of candidate data providers based on the request; and send a data provider verification request to a data security and validity function to authenticate the candidate data providers.

Example 79 may include the device of example 78, wherein the data provider verification request comprises a provider list comprising a provider identifier, a provider type, a home public land mobile network identifier, an expected data set, and a required trust level for every candidate data provider.

Example 80 may include the device of any one of examples 74 to 79, wherein the processing circuitry is further configured to: check if a prior data collection service request is in process for a same service identifier and service attributes; and if the prior data collection service request is in process, establish the data flow path by modifying an existing data flow path identified by an existing data flow identifier.

Example 81 may include the device of any one of examples 74 to 80, wherein the processing circuitry is configured to determine the network functions by utilizing a network repository function to discover the data processing function and the data repository function.

Example 82 may include the device of example 81, wherein factors for selection of the data processing function comprise data formatting and processing capability, data feature scaling capability, and data annotation capability.

Example 83 may include the device of any one of examples 74 to 82, wherein the processing circuitry is further configured to: verify user consent if part of data to be collected from data providers is user data; and subscribe to a data security and validity function or a function for user consent to receive updates regarding changes to the user consent.

Example 84 may include the device of any one of examples 74 to 83, wherein the processing circuitry is further configured to: invoke event subscription requests to data providers associated with the data flow path; and receive an event notification response from a data provider of the data providers when new data for a subscribed event is available.

Example 85 may include the device of example 84, wherein the event notification response is tagged with the data flow identifier for further data management by the device.

Example 86 may include the device of any one of examples 74 to 85, wherein the processing circuitry is configured to send a data management processing request to the data processing function, wherein the data management processing request comprises a data repository function identifier indicating where processed data is to be stored.

Example 87 may include the device of example 86, wherein the data management processing request further comprises data processing attributes.

Example 88 may include the device of example 86 or 87, wherein the processing circuitry is configured to receive a response from the data processing function indicating that collected and processed data is stored in the data repository function with a data set tag assigned corresponding to the data flow identifier.

Example 89 may include the device of example 88, wherein the processing circuitry is further configured to send a data management storage request to the data repository function where event data associated with the data flow identifier are stored, and receive a response from the data repository function that the data is stored with the data set tag.

Example 90 may include the device of any one of examples 74 to 89, wherein the processing circuitry is further configured to: receive a notification regarding a change in a user consent status; and unsubscribe for data collection corresponding to a user equipment associated with the user consent status and send a data management delete message to the data repository function.

Example 91 may include the device of any one of examples 74 to 89, wherein the processing circuitry is further configured to send a data service collection response to the data consumer to notify that data requested is collected and stored, wherein the data service collection response comprises an identifier of the data repository function.

Example 92 may include the device of example 91, wherein the processing circuitry is further configured to: receive a data fetch request from the data consumer comprising a service identifier; send a data management retrieval request to the data repository function using a data set tag associated with the data flow identifier corresponding to the service identifier; and relay stored data received from the data repository function to the data consumer.

Example 93 may include the device of any one of examples 74 to 92, wherein the processing circuitry is further configured to: receive an unsubscribe message from the data consumer; and delete the data flow path and release instances of the network functions associated with the data flow identifier.

Example 94 may include the device of any one of examples 74 to 93, wherein the processing circuitry is further configured to control a publish/subscribe data broker that delivers data topics, and issue pub/sub-topic grants on the data broker.

Example 95 may include the device of any one of examples 74 to 94, wherein the device is located in a radio access network.

Example 96 may include the device of example 95, wherein the processing circuitry is configured to establish the data flow path in response to a decision by a network function in a core network.

Example 97 may include the device of any one of examples 74 to 94, wherein the device is located in a core network and the data repository function is located in a radio access network.

Example 98 may include the device of example 97, wherein the processing circuitry is configured to assign a data tag to associate a data storage, locality, and retention policy.

Example 99 may include the device of any one of examples 74 to 94, wherein the device and the data repository function is located in a core network.

Example 100 may include a system for a wireless communication network, the system comprising the device of any one of examples 74 to 99.

Example 101 may include the system of example 100, further comprising the data processing function, wherein the data processing function is configured to: receive a data management processing request from the device, the request comprising data processing attributes; perform data formatting, processing, and annotation on collected data according to the data processing attributes to transform the collected data into a format required to meet operational needs of the wireless communication network; and facilitate storage of the processed data in the data repository function.

Example 102 may include the system of example 100 or 101, further comprising the data repository function, wherein the data repository function is configured to: store collected raw data or processed data; receive a data management storage request from the device or the data processing function; and send a response indicating that data is stored with a data set tag.

Example 103 may include the system of any one of examples 100 to 102, further comprising a data security and validity function, wherein the data security and validity function is configured to: receive a data provider verification request from the device; perform provider authentication and policy checks on candidate data providers; and send a response to the device indicating data providers which were successfully verified.

Example 104 may include the system of any one of examples 100 to 103, further comprising a data provider, wherein the data provider is configured to: receive an event subscription request from the device; and send an event notification response to the device when new data is available, wherein the event notification response is tagged with the data flow identifier.

Example 105 may include the system of any one of examples 100 to 104, further comprising the data consumer, wherein the data consumer is configured to: send the request for the data collection service to the device; receive a notification from the device that data requested is collected and stored; send a data fetch request to the device comprising a service identifier; and receive stored data relayed by the device from the data repository function.

Example 106 may include a method for a wireless communication network, the method comprising: receiving a request for a data collection service from a data consumer; determining, based on the request, network functions to form a data management pipeline, wherein the network functions comprise at least one of a data processing function and/or a data repository function; and establishing, for the data collection service, a data flow path identified by a data flow identifier, wherein the data flow path comprises the determined network functions.

Example 107 may include the method of example 106, wherein the request for the data collection service comprises a service identifier representing an identification of the data consumer, and a list of service attributes for the data collection service.

Example 108 may include the method of example 107, wherein the list of service attributes comprises a type of analytics, analytics filter information, and a time period over which data collection is requested.

Example 109 may include the method of example 107 or 108, wherein the request for the data collection service further comprises an indication on whether data processing is required, and wherein, if data processing is required, the request comprises data processing attributes comprising at least one of data feature imputation, feature scaling normalization, standardization, discretization, one-hot encoding, or data formatting and processing instructions.

Example 110 may include the method of any one of examples 106 to 109, further comprising: determining a list of candidate data providers based on the request; and sending a data provider verification request to a data security and validity function to authenticate the candidate data providers.

Example 111 may include the method of example 110, wherein the data provider verification request comprises a provider list comprising a provider identifier, a provider type, a home public land mobile network identifier, an expected data set, and a required trust level for every candidate data provider.

Example 112 may include the method of any one of examples 106 to 111, further comprising: checking if a prior data collection service request is in process for a same service identifier and service attributes; and if the prior data collection service request is in process, establishing the data flow path by modifying an existing data flow path identified by an existing data flow identifier.

Example 113 may include the method of any one of examples 106 to 112, comprising determining the network functions by utilizing a network repository function to discover the data processing function and the data repository function.

Example 114 may include the method of example 113, wherein factors for selection of the data processing function comprise data formatting and processing capability, data feature scaling capability, and data annotation capability.

Example 115 may include the method of any one of examples 106 to 114, further comprising: verifying user consent if part of data to be collected from data providers is user data; and subscribing to a data security and validity function or a function for user consent to receive updates regarding changes to the user consent.

Example 116 may include the method of any one of examples 106 to 115, further comprising: invoking event subscription requests to data providers associated with the data flow path; and receiving an event notification response from a data provider of the data providers when new data for a subscribed event is available.

Example 117 may include the method of example 116, wherein the event notification response is tagged with the data flow identifier for further data management.

Example 118 may include the method of any one of examples 106 to 117, comprising sending a data management processing request to the data processing function, wherein the data management processing request comprises a data repository function identifier indicating where processed data is to be stored.

Example 119 may include the method of example 118, wherein the data management processing request further comprises data processing attributes.

Example 120 may include the method of example 118 or 119, comprising receiving a response from the data processing function indicating that collected and processed data is stored in the data repository function with a data set tag assigned corresponding to the data flow identifier.

Example 121 may include the method of example 120, further comprising sending a data management storage request to the data repository function where event data associated with the data flow identifier are stored, and receiving a response from the data repository function that the data is stored with the data set tag.

Example 122 may include the method of any one of examples 106 to 121, further comprising: receiving a notification regarding a change in a user consent status; and unsubscribing for data collection corresponding to a user equipment associated with the user consent status and sending a data management delete message to the data repository function.

Example 123 may include the method of any one of examples 106 to 121, further comprising sending a data service collection response to the data consumer to notify that data requested is collected and stored, wherein the data service collection response comprises an identifier of the data repository function.

Example 124 may include the method of example 123, further comprising: receiving a data fetch request from the data consumer comprising a service identifier; sending a data management retrieval request to the data repository function using a data set tag associated with the data flow identifier corresponding to the service identifier; and relaying stored data received from the data repository function to the data consumer.

Example 125 may include the method of any one of examples 106 to 124, further comprising: receiving an unsubscribe message from the data consumer; and deleting the data flow path and releasing instances of the network functions associated with the data flow identifier.

Example 126 may include the method of any one of examples 106 to 125, further comprising controlling a publish/subscribe data broker that delivers data topics, and issuing pub/sub-topic grants on the data broker.

Example 127 may include the method of any one of examples 106 to 126, wherein the method is performed by a device located in a radio access network.

Example 128 may include the method of example 127, comprising establishing the data flow path in response to a decision by a network function in a core network.

Example 129 may include the method of any one of examples 106 to 126, wherein the method is performed by a device located in a core network and the data repository function is located in a radio access network.

Example 130 may include the method of example 129, comprising assigning a data tag to associate a data storage, locality, and retention policy.

Example 131 may include the method of any one of examples 106 to 126, wherein the method is performed by a device located in a core network and the data repository function is located in a core network.

Example 132 may include a non-transitory computer-readable medium comprising instructions which, when executed by processing circuitry of a device, cause the device to perform the method of any one of examples 106 to 131.

Example UZQ01 may include an apparatus comprising means for performing any of the methods of examples 1-132.

Example UZQ02 may include a network node comprising a communication interface and processing circuitry connected thereto and configured to perform the methods of examples 1-132.

Example UZQ03 may include an apparatus comprising means to perform one or more elements of a method described in or related to any of examples 1-132, or any other method or process described herein.

Example UZQ04 may include one or more non-transitory computer-readable media comprising instructions to cause an electronic device, upon execution of the instructions by one or more processors of the electronic device, to perform one or more elements of a method described in or related to any of examples 1-132, or any other method or process described herein.

Example UZQ05 may include an apparatus comprising logic, modules, or circuitry to perform one or more elements of a method described in or related to any of examples 1-132, or any other method or process described herein.

Example UZQ06 may include a method, technique, or process as described in or related to any of examples 1-132, or portions or parts thereof.

Example UZQ07 may include an apparatus comprising: one or more processors and one or more computer-readable media comprising instructions that, when executed by the one or more processors, cause the one or more processors to perform the method, techniques, or process as described in or related to any of examples 1-132, or portions thereof.

Example UZQ08 may include a signal as described in or related to any of examples 1-132, or portions or parts thereof.

Example UZQ09 may include a datagram, packet, frame, segment, protocol data unit (PDU), or message as described in or related to any of examples 1-132, or portions or parts thereof, or otherwise described in the present disclosure.

Example UZQ10 may include a signal encoded with data as described in or related to any of examples 1-132, or portions or parts thereof, or otherwise described in the present disclosure.

Example UZQ11 may include a signal encoded with a datagram, packet, frame, segment, protocol data unit (PDU), or message as described in or related to any of examples 1-132, or portions or parts thereof, or otherwise described in the present disclosure.

Example UZQ12 may include an electromagnetic signal carrying computer-readable instructions, wherein execution of the computer-readable instructions by one or more processors is to cause the one or more processors to perform the method, techniques, or process as described in or related to any of examples 1-132, or portions thereof.

Example UZQ13 may include a computer program comprising instructions, wherein execution of the program by a processing element is to cause the processing element to carry out the method, techniques, or process as described in or related to any of examples 1-132, or portions thereof.

Example UZQ14 may include a signal in a wireless network as shown and described herein.

Example UZQ15 may include a method of communicating in a wireless network as shown and described herein.

Example UZQ16 may include a system for providing wireless communication as shown and described herein.

Example UZQ17 may include a device for providing wireless communication as shown and described herein.

An example implementation is an edge computing system, including respective edge processing devices and nodes to invoke or perform the operations of the examples above, or other subject matter described herein. Another example implementation is a client endpoint node, operable to invoke or perform the operations of the examples above, or other subject matter described herein. Another example implementation is an aggregation node, network hub node, gateway node, or core data processing node, within or coupled to an edge computing system, operable to invoke or perform the operations of the examples above, or other subject matter described herein. Another example implementation is an access point, base station, road-side unit, street-side unit, or on-premise unit, within or coupled to an edge computing system, operable to invoke or perform the operations of the examples above, or other subject matter described herein. Another example implementation is an edge provisioning node, service orchestration node, application orchestration node, or multi-tenant management node, within or coupled to an edge computing system, operable to invoke or perform the operations of the examples above, or other subject matter described herein. Another example implementation is an edge node operating an edge provisioning service, application or service orchestration service, virtual machine deployment, container deployment, function deployment, and compute management, within or coupled to an edge computing system, operable to invoke or perform the operations of the examples above, or other subject matter described herein. Another example implementation is an edge computing system operable as an edge mesh, as an edge mesh with side car loading, or with mesh-to-mesh communications, operable to invoke or perform the operations of the examples above, or other subject matter described herein. Another example implementation is an edge computing system including aspects of network functions, acceleration functions, acceleration hardware, storage hardware, or computation hardware resources, operable to invoke or perform the use cases discussed herein, with use of the examples above, or other subject matter described herein. Another example implementation is an edge computing system adapted for supporting client mobility, vehicle-to-vehicle (V2V), vehicle-to-everything (V2X), or vehicle-to-infrastructure (V2I) scenarios, and optionally operating according to ETSI MEC specifications, operable to invoke or perform the use cases discussed herein, with use of the examples above, or other subject matter described herein. Another example implementation is an edge computing system adapted for mobile wireless communications, including configurations according to an 3GPP 4G/LTE or 5G network capabilities, operable to invoke or perform the use cases discussed herein, with use of the examples above, or other subject matter described herein. Another example implementation is a computing system adapted for network communications, including configurations according to an O-RAN capabilities, operable to invoke or perform the use cases discussed herein, with use of the examples above, or other subject matter described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### TERMINOLOGY

The terminology used herein is for the purpose of describing particular embodiments only and is not intended to be limiting of the disclosure. As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C). The description may use the phrases "in an embodiment," or "In some embodiments," which may each refer to one or more of the same or different embodiments. Furthermore, the terms "comprising," "including," "having," and the like, as used with respect to embodiments of the present disclosure, are synonymous.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "memory" and/or "memory circuitry" as used herein refers to one or more hardware devices for storing data, including RAM, MRAM, PRAM, DRAM, and/or SDRAM, core memory, ROM, magnetic disk storage mediums, optical storage mediums, flash memory devices or other machine readable mediums for storing data. The term "computer-readable medium" may include, but is not limited to, memory, portable or fixed storage devices, optical storage devices, and various other mediums capable of storing, containing or carrying instructions or data.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource. The term "element" refers to a unit that is indivisible at a given level of abstraction and has a clearly defined boundary, wherein an element may be any type of entity including, for example, one or more devices, systems, controllers, network elements, modules, etc., or combinations thereof. The term "device" refers to a physical entity embedded inside, or attached to, another physical entity in its vicinity, with capabilities to convey digital information from or to that physical entity. The term "entity" refers to a distinct component of an architecture or device, or information transferred as a payload. The term "controller" refers to an element or entity that has the capability to affect a physical entity, such as by changing its state or causing the physical entity to move.

The term "cloud computing" or "cloud" refers to a paradigm for enabling network access to a scalable and elastic pool of shareable computing resources with self-service provisioning and administration on-demand and without active management by users. Cloud computing provides cloud computing services (or cloud services), which are one or more capabilities offered via cloud computing that are invoked using a defined interface (e.g., an API or the like). The term "computing resource" or simply "resource" refers to any physical or virtual component, or usage of such components, of limited availability within a computer system or network. Examples of computing resources include usage/access to, for a period of time, servers, processor(s), storage equipment, memory devices, memory areas, networks, electrical power, input/output (peripheral) devices, mechanical devices, network connections (e.g., channels/links, ports, network sockets, etc.), operating systems, virtual machines (VMs), software/applications, computer files, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable. As used herein, the term "cloud service provider" (or CSP) indicates an organization which operates typically large-scale "cloud" resources comprised of centralized, regional, and edge data centers (e.g., as used in the context of the public cloud). In other examples, a CSP may also be referred to as a Cloud Service Operator (CSO). References to "cloud computing" generally refer to computing resources and services offered by a CSP or a CSO, at remote locations with at least some increased latency, distance, or constraints relative to edge computing.

As used herein, the term "data center" refers to a purpose-designed structure that is intended to house multiple high-performance compute and data storage nodes such that a large amount of compute, data storage and network resources are present at a single location. This often entails specialized rack and enclosure systems, suitable heating, cooling, ventilation, security, fire suppression, and power delivery systems. The term may also refer to a compute and data storage node in some contexts. A data center may vary in scale between a centralized or cloud data center (e.g., largest), regional data center, and edge data center (e.g., smallest).

As used herein, the term "edge computing" refers to the implementation, coordination, and use of computing and resources at locations closer to the "edge" or collection of "edges" of a network. Deploying computing resources at the network's edge may reduce application and network latency, reduce network backhaul traffic and associated energy consumption, improve service capabilities, improve compliance with security or data privacy requirements (especially as compared to conventional cloud computing), and improve total cost of ownership). As used herein, the term "edge compute node" refers to a real-world, logical, or virtualized implementation of a compute-capable element in the form of a device, gateway, bridge, system or subsystem, component, whether operating in a server, client, endpoint, or peer mode, and whether located at an "edge" of an network or at a connected location further within the network. References to a "node" used herein are generally interchangeable with a "device", "component", and "subsystem"; however, references to an "edge computing system" or "edge computing network" generally refer to a distributed architecture, organization, or collection of multiple nodes and devices, and which is organized to accomplish or offer some aspect of services or resources in an edge computing setting.

Additionally or alternatively, the term "Edge Computing" refers to a concept, as described in [6], that enables operator and 3rd party services to be hosted close to the UE's access point of attachment, to achieve an efficient service delivery through the reduced end-to-end latency and load on the transport network. As used herein, the term "Edge Computing Service Provider" refers to a mobile network operator or a 3rd party service provider offering Edge Computing service. As used herein, the term "Edge Data Network" refers to a local Data Network (DN) that supports the architecture for enabling edge applications. As used herein, the term "Edge Hosting Environment" refers to an environment providing support required for Edge Application Server's execution. As used herein, the term "Application Server" refers to application software resident in the cloud performing the server function.

The term "Internet of Things" or "IoT" refers to a system of interrelated computing devices, mechanical and digital machines capable of transferring data with little or no human interaction, and may involve technologies such as real-time analytics, machine learning and/or AI, embedded systems, wireless sensor networks, control systems, automation (e.g., smarthome, smart building and/or smart city technologies), and the like. IoT devices are usually low-power devices without heavy compute or storage capabilities. "Edge IoT devices" may be any kind of IoT devices deployed at a network's edge.

As used herein, the term "cluster" refers to a set or grouping of entities as part of an edge computing system (or systems), in the form of physical entities (e.g., different computing systems, networks or network groups), logical entities (e.g., applications, functions, security constructs, containers), and the like. In some locations, a "cluster" is also referred to as a "group" or a "domain". The membership of cluster may be modified or affected based on conditions or functions, including from dynamic or property-based membership, from network or system management scenarios, or from various example techniques discussed below which may add, modify, or remove an entity in a cluster. Clusters may also include or be associated with multiple layers, levels, or properties, including variations in security features and results based on such layers, levels, or properties.

The term "application" may refer to a complete and deployable package, environment to achieve a certain function in an operational environment. The term "AI/ML application" or the like may be an application that contains some AI/ML models and application-level descriptions. The term "machine learning" or "ML" refers to the use of computer systems implementing algorithms and/or statistical models to perform specific task(s) without using explicit instructions, but instead relying on patterns and inferences. ML algorithms build or estimate mathematical model(s) (referred to as "ML models" or the like) based on sample data (referred to as "training data," "model training information," or the like) in order to make predictions or decisions without being explicitly programmed to perform such tasks. Generally, an ML algorithm is a computer program that learns from experience with respect to some task and some performance measure, and an ML model may be any object or data structure created after an ML algorithm is trained with one or more training datasets. After training, an ML model may be used to make predictions on new datasets. Although the term "ML algorithm" refers to different concepts than the term "ML model," these terms as discussed herein may be used interchangeably for the purposes of the present disclosure.

The term "machine learning model," "ML model," or the like may also refer to ML methods and concepts used by an ML-assisted solution. An "ML-assisted solution" is a solution that addresses a specific use case using ML algorithms during operation. ML models include supervised learning (e.g., linear regression, k-nearest neighbor (KNN), decision tree algorithms, support machine vectors, Bayesian algorithm, ensemble algorithms, etc.) unsupervised learning (e.g., K-means clustering, principle component analysis (PCA), etc.), reinforcement learning (e.g., Q-learning, multi-armed bandit learning, deep RL, etc.), neural networks, and the like. Depending on the implementation a specific ML model could have many sub-models as components and the ML model may train all sub-models together. Separately trained ML models can also be chained together in an ML pipeline during inference. An "ML pipeline" is a set of functionalities, functions, or functional entities specific for an ML-assisted solution; an ML pipeline may include one or several data sources in a data pipeline, a model training pipeline, a model evaluation pipeline, and an actor. The "actor" is an entity that hosts an ML assisted solution using the output of the ML model inference). The term "ML training host" refers to an entity, such as a network function, that hosts the training of the model. The term "ML inference host" refers to an entity, such as a network function, that hosts model during inference mode (which includes both the model execution as well as any online learning if applicable). The ML-host informs the actor about the output of the ML algorithm, and the actor takes a decision for an action (an "action" is performed by an actor as a result of the output of an ML assisted solution). The term "model inference information" refers to information used as an input to the ML model for determining inference(s); the data used to train an ML model and the data used to determine inferences may overlap, however, "training data" and "inference data" refer to different concepts.

The terms "instantiate," "instantiation," and the like as used herein refers to the creation of an instance. An "instance" also refers to a concrete occurrence of an object, which may occur, for example, during execution of program code. The term "information element" refers to a structural element containing one or more fields. The term "field" refers to individual contents of an information element, or a data element that contains content. As used herein, a "database object", "data structure", or the like may refer to any representation of information that is in the form of an object, attribute-value pair (AVP), key-value pair (KVP), tuple, etc., and may include variables, data structures, functions, methods, classes, database records, database fields, database entities, associations between data and/or database entities (also referred to as a "relation"), blocks and links between blocks in block chain implementations, and/or the like.

An "information object," as used herein, refers to a collection of structured data and/or any representation of information, and may include, for example electronic documents (or "documents"), database objects, data structures, files, audio data, video data, raw data, archive files, application packages, and/or any other like representation of information. The terms "electronic document" or "document," may refer to a data structure, computer file, or resource used to record data, and includes various file types and/or data formats such as word processing documents, spreadsheets, slide presentations, multimedia items, webpage and/or source code documents, and/or the like. As examples, the information objects may include markup and/or source code documents such as HTML, XML, JSON, Apex^{®}, CSS, JSP, MessagePack^{™}, Apache^{®} Thrift^{™}, ASN.1, Google^{®} Protocol Buffers (protobuf), or some other document(s)/format(s) such as those discussed herein. An information object may have both a logical and a physical structure. Physically, an information object comprises one or more units called entities. An entity is a unit of storage that contains content and is identified by a name. An entity may refer to other entities to cause their inclusion in the information object. An information object begins in a document entity, which is also referred to as a root element (or "root"). Logically, an information object comprises one or more declarations, elements, comments, character references, and processing instructions, all of which are indicated in the information object (e.g., using markup).

The term "data item" as used herein refers to an atomic state of a particular object with at least one specific property at a certain point in time. Such an object is usually identified by an object name or object identifier, and properties of such an object are usually defined as database objects (e.g., fields, records, etc.), object instances, or data elements (e.g., mark-up language elements/tags, etc.). Additionally or alternatively, the term "data item" as used herein may refer to data elements and/or content items, although these terms may refer to difference concepts. The term "data element" or "element" as used herein refers to a unit that is indivisible at a given level of abstraction and has a clearly defined boundary. A data element is a logical component of an information object (e.g., electronic document) that may begin with a start tag (e.g., "<element>") and end with a matching end tag (e.g., "</element>"), or only has an empty element tag (e.g., "<element />"). Any characters between the start tag and end tag, if any, are the element's content (referred to herein as "content items" or the like).

The content of an entity may include one or more content items, each of which has an associated datatype representation. A content item may include, for example, attribute values, character values, URIs, qualified names (qnames), parameters, and the like. A qname is a fully qualified name of an element, attribute, or identifier in an information object. A qname associates a URI of a namespace with a local name of an element, attribute, or identifier in that namespace. To make this association, the qname assigns a prefix to the local name that corresponds to its namespace. The qname comprises a URI of the namespace, the prefix, and the local name. Namespaces are used to provide uniquely named elements and attributes in information objects. Content items may include text content (e.g., "<element>content item</element>"), attributes (e.g., "<element attribute="attributeValue">"), and other elements referred to as "child elements" (e.g., "<element1><element2>content item</element2></element1>"). An "attribute" may refer to a markup construct including a name-value pair that exists within a start tag or empty element tag. Attributes contain data related to its element and/or control the element's behavior.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable. The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radio frequency carrier," and/or any other like term denoting a pathway or medium through which data is communicated. Additionally, the term "link" as used herein refers to a connection between two devices through a RAT for the purpose of transmitting and receiving information. As used herein, the term "radio technology" refers to technology for wireless transmission and/or reception of electromagnetic radiation for information transfer. The term "radio access technology" or "RAT" refers to the technology used for the underlying physical connection to a radio based communication network. As used herein, the term "communication protocol" (either wired or wireless) refers to a set of standardized rules or instructions implemented by a communication device and/or system to communicate with other devices and/or systems, including instructions for packetizing/depacketizing data, modulating/demodulating signals, implementation of protocols stacks, and/or the like.

As used herein, the term "radio technology" refers to technology for wireless transmission and/or reception of electromagnetic radiation for information transfer. The term "radio access technology" or "RAT" refers to the technology used for the underlying physical connection to a radio based communication network. As used herein, the term "communication protocol" (either wired or wireless) refers to a set of standardized rules or instructions implemented by a communication device and/or system to communicate with other devices and/or systems, including instructions for packetizing/depacketizing data, modulating/demodulating signals, implementation of protocols stacks, and/or the like. Examples of wireless communications protocols may be used in various embodiments include a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology including, for example, 3GPP Fifth Generation (5G) or New Radio (NR), Universal Mobile Telecommunications System (UMTS), Freedom of Multimedia Access (FOMA), Long Term Evolution (LTE), LTE-Advanced (LTE Advanced), LTE Extra, LTE-A Pro, cdmaOne (2G), Code Division Multiple Access 2000 (CDMA 2000), Cellular Digital Packet Data (CDPD), Mobitex, Circuit Switched Data (CSD), High-Speed CSD (HSCSD), Universal Mobile Telecommunications System (UMTS), Wideband Code Division Multiple Access (W-CDM), High Speed Packet Access (HSPA), HSPA Plus (HSPA+), Time Division-Code Division Multiple Access (TD-CDMA), Time Division-Synchronous Code Division Multiple Access (TD-SCDMA), LTE LAA, MuLTEfire, UMTS Terrestrial Radio Access (UTRA), Evolved UTRA (E-UTRA), Evolution-Data Optimized or Evolution-Data Only (EV-DO), Advanced Mobile Phone System (AMPS), Digital AMPS (D-AMPS), Total Access Communication System/Extended Total Access Communication System (TACS/ETACS), Push-to-talk (PTT), Mobile Telephone System (MTS), Improved Mobile Telephone System (IMTS), Advanced Mobile Telephone System (AMTS), Cellular Digital Packet Data (CDPD), DataTAC, Integrated Digital Enhanced Network (iDEN), Personal Digital Cellular (PDC), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Bluetooth^{®}, Bluetooth Low Energy (BLE), IEEE 802.15.4 based protocols (e.g., IPv6 over Low power Wireless Personal Area Networks (6LoWPAN), WirelessHART, MiWi, Thread, 802.11a, etc.) WiFi-direct, ANT/ANT+, ZigBee, Z-Wave, 3GPP device-to-device (D2D) or Proximity Services (ProSe), Universal Plug and Play (UPnP), Low-Power Wide-Area-Network (LPWAN), Long Range Wide Area Network (LoRA) or LoRaWAN^{™} developed by Semtech and the LoRa Alliance, Sigfox, Wireless Gigabit Alliance (WiGig) standard, Worldwide Interoperability for Microwave Access (WiMAX), mmWave standards in general (e.g., wireless systems operating at 10-300 GHz and above such as WiGig, IEEE 802.11ad, IEEE 802.11ay, etc.), V2X communication technologies (including 3GPP C-V2X), Dedicated Short Range Communications (DSRC) communication systems such as Intelligent-Transport-Systems (ITS) including the European ITS-G5, ITS-G5B, ITS-G5C, etc. In addition to the standards listed above, any number of satellite uplink technologies may be used for purposes of the present disclosure including, for example, radios compliant with standards issued by the International Telecommunication Union (ITU), or the European Telecommunications Standards Institute (ETSI), among others. The examples provided herein are thus understood as being applicable to various other communication technologies, both existing and not yet formulated.

The term "access network" refers to any network, using any combination of radio technologies, RATs, and/or communication protocols, used to connect user devices and service providers. In the context of WLANs, an "access network" is an IEEE 802 local area network (LAN) or metropolitan area network (MAN) between terminals and access routers connecting to provider services. The term "access router" refers to router that terminates a medium access control (MAC) service from terminals and forwards user traffic to information servers according to Internet Protocol (IP) addresses.

The term "SMTC" refers to an SSB-based measurement timing configuration configured by *SSB-MeasurementTimingConfiguration.* The term "SSB" refers to a synchronization signal/Physical Broadcast Channel (SS/PBCH) block, which includes a Primary Syncrhonization Signal (PSS), a Secondary Syncrhonization Signal (SSS), and a PBCH. The term "a "Primary Cell" refers to the MCG cell, operating on the primary frequency, in which the UE either performs the initial connection establishment procedure or initiates the connection re-establishment procedure. The term "Primary SCG Cell" refers to the SCG cell in which the UE performs random access when performing the Reconfiguration with Sync procedure for DC operation. The term "Secondary Cell" refers to a cell providing additional radio resources on top of a Special Cell for a UE configured with CA. The term "Secondary Cell Group" refers to the subset of serving cells comprising the PSCell and zero or more secondary cells for a UE configured with DC. The term "Serving Cell" refers to the primary cell for a UE in RRC_CONNECTED not configured with CA/DC there is only one serving cell comprising of the primary cell. The term "serving cell" or "serving cells" refers to the set of cells comprising the Special Cell(s) and all secondary cells for a UE in RRC_CONNECTED configured with CA. The term "Special Cell" refers to the PCell of the MCG or the PSCell of the SCG for DC operation; otherwise, the term "Special Cell" refers to the Pcell.

The term "A1 policy" refers to a type of declarative policies expressed using formal statements that enable the non-RT RIC function in the SMO to guide the near-RT RIC function, and hence the RAN, towards better fulfilment of the RAN intent.

The term "Al Enrichment information" refers to information utilized by near-RT RIC that is collected or derived at SMO/non-RT RIC either from non-network data sources or from network functions themselves.

The term "A1-Policy Based Traffic Steering Process Mode" refers to an operational mode in which the Near-RT RIC is configured through Al Policy to use Traffic Steering Actions to ensure a more specific notion of network performance (for example, applying to smaller groups of E2 Nodes and UEs in the RAN) than that which it ensures in the Background Traffic Steering.

The term "Background Traffic Steering Processing Mode" refers to an operational mode in which the Near-RT RIC is configured through O1 to use Traffic Steering Actions to ensure a general background network performance which applies broadly across E2 Nodes and UEs in the RAN.

The term "Baseline RAN Behavior" refers to the default RAN behavior as configured at the E2 Nodes by SMO.

The term "E2" refers to an interface connecting the Near-RT RIC and one or more O-CU-CPs, one or more O-CU-UPs, one or more O-DUs, and one or more O-eNBs.

The term "E2 Node" refers to a logical node terminating E2 interface. In this version of the specification, ORAN nodes terminating E2 interface are: for NR access: O-CU-CP, O-CU-UP, O-DU or any combination; and for E-UTRA access: O-eNB.

The term "Intents", in the context of O-RAN systems/implementations, refers to declarative policy to steer or guide the behavior of RAN functions, allowing the RAN function to calculate the optimal result to achieve stated objective.

The term "O-RAN non-real-time RAN Intelligent Controller" or "non-RT RIC" refers to a logical function that enables non-real-time control and optimization of RAN elements and resources, AI/ML workflow including model training and updates, and policy-based guidance of applications/features in Near-RT RIC.

The term "Near-RT RIC" or "O-RAN near-real-time RAN Intelligent Controller" refers to a logical function that enables near-real-time control and optimization of RAN elements and resources via fine-grained (e.g., UE basis, Cell basis) data collection and actions over E2 interface.

The term "O-RAN Central Unit" or "O-CU" refers to a logical node hosting RRC, SDAP and PDCP protocols.

The term "O-RAN Central Unit - Control Plane" or "O-CU-CP" refers to a logical node hosting the RRC and the control plane part of the PDCP protocol.

The term "O-RAN Central Unit - User Plane" or "O-CU-UP" refers to a logical node hosting the user plane part of the PDCP protocol and the SDAP protocol.

The term "O-RAN Distributed Unit" or "O-DU" refers to a logical node hosting RLC/MAC/High-PHY layers based on a lower layer functional split.

The term "O-RAN eNB" or "O-eNB" refers to an eNB or ng-eNB that supports E2 interface.

The term "O-RAN Radio Unit" or "O-RU" refers to a logical node hosting Low-PHY layer and RF processing based on a lower layer functional split. This is similar to 3GPP's "TRP" or "RRH" but more specific in including the Low-PHY layer (FFT/iFFT, PRACH extraction).

The term "O1" refers to an interface between orchestration & management entities (Orchestration/NMS) and O-RAN managed elements, for operation and management, by which FCAPS management, Software management, File management and other similar functions shall be achieved.

The term "RAN UE Group" refers to an aggregations of UEs whose grouping is set in the E2 nodes through E2 procedures also based on the scope of Al policies. These groups can then be the target of E2 CONTROL or POLICY messages.

The term "Traffic Steering Action" refers to the use of a mechanism to alter RAN behavior. Such actions include E2 procedures such as CONTROL and POLICY.

The term "Traffic Steering Inner Loop" refers to the part of the Traffic Steering processing, triggered by the arrival of periodic TS related KPM (Key Performance Measurement) from E2 Node, which includes UE grouping, setting additional data collection from the RAN, as well as selection and execution of one or more optimization actions to enforce Traffic Steering policies.

The term "Traffic Steering Outer Loop" refers to the part of the Traffic Steering processing, triggered by the near-RT RIC setting up or updating Traffic Steering aware resource optimization procedure based on information from A1 Policy setup or update, Al Enrichment Information (EI) and/or outcome of Near-RT RIC evaluation, which includes the initial configuration (preconditions) and injection of related A1 policies, Triggering conditions for TS changes.

The term "Traffic Steering Processing Mode" refers to an operational mode in which either the RAN or the Near-RT RIC is configured to ensure a particular network performance. This performance includes such aspects as cell load and throughput, and can apply differently to different E2 nodes and UEs. Throughout this process, Traffic Steering Actions are used to fulfill the requirements of this configuration.

The term "Traffic Steering Target" refers to the intended performance result that is desired from the network, which is configured to Near-RT RIC over O1.

Furthermore, any of the disclosed embodiments and example implementations can be embodied in the form of various types of hardware, software, firmware, middleware, or combinations thereof, including in the form of control logic, and using such hardware or software in a modular or integrated manner. Additionally, any of the software components or functions described herein can be implemented as software, program code, script, instructions, etc., operable to be executed by processor circuitry. These components, functions, programs, etc., can be developed using any suitable computer language such as, for example, Python, PyTorch, NumPy, Ruby, Ruby on Rails, Scala, Smalltalk, Java^{™}, C++, C#, "C", Kotlin, Swift, Rust, Go (or "Golang"), EMCAScript, JavaScript, TypeScript, Jscript, ActionScript, Server-Side JavaScript (SSJS), PHP, Pearl, Lua, Torch/Lua with Just-In Time compiler (LuaJIT), Accelerated Mobile Pages Script (AMPscript), VBScript, JavaServer Pages (JSP), Active Server Pages (ASP), Node.js, ASP.NET, JAMscript, Hypertext Markup Language (HTML), extensible HTML (XHTML), Extensible Markup Language (XML), XML User Interface Language (XUL), Scalable Vector Graphics (SVG), RESTful API Modeling Language (RAML), wiki markup or Wikitext, Wireless Markup Language (WML), Java Script Object Notion (JSON), Apache^{®} MessagePack^{™}, Cascading Stylesheets (CSS), extensible stylesheet language (XSL), Mustache template language, Handlebars template language, Guide Template Language (GTL), Apache^{®} Thrift, Abstract Syntax Notation One (ASN.1), Google^{®} Protocol Buffers (protobuf), Bitcoin Script, EVM^{®} bytecode, Solidity^{™}, Vyper (Python derived), Bamboo, Lisp Like Language (LLL), Simplicity provided by Blockstream^{™}, Rholang, Michelson, Counterfactual, Plasma, Plutus, Sophia, Salesforce^{®} Apex^{®}, and/or any other programming language or development tools including proprietary programming languages and/or development tools. The software code can be stored as a computer- or processor-executable instructions or commands on a physical non-transitory computer-readable medium. Examples of suitable media include RAM, ROM, magnetic media such as a hard-drive or a floppy disk, or an optical medium such as a compact disk (CD) or DVD (digital versatile disk), flash memory, and the like, or any combination of such storage or transmission devices.

### ABBREVIATIONS

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

**Table X1X Abbreviations:**

| | | | | | |
|---|---|---|---|---|---|
| 3GPP | Third Generation Partnership Project | IBE | In-Band Emission | PUSCH | Physical Uplink Shared Channel |
| 4G | Fourth Generation | IEEE | Institute of Electrical and Electronics Engineers | QAM | Quadrature Amplitude Modulation |
| 5G | Fifth Generation | IEI | Information Element Identifier | QCI | QoS class of identifier |
| 5GC | 5G Core network | IEIDL | Information Element Identifier Data Length | QCL | Quasi co-location |
| AC | Application Client | IETF | Internet Engineering Task Force | QFI | QoS Flow ID, QoS Flow Identifier |
| ACK | Acknowledgement | IF | Infrastructure | QoS | Quality of Service |
| ACID | Application Client Identification | IM | Interference Measurement, Intermodulation, IP Multimedia | QPSK | Quadrature (Quaternary) Phase Shift Keying |
| AF | Application Function | IMC | IMS Credentials | QZSS | Quasi-Zenith Satellite System |
| AM | Acknowledged Mode | IMEI | International Mobile Equipment Identity | RA-RNTI | Random Access RNTI |
| AMBR | Aggregate Maximum Bit Rate | IMGI | International mobile group identity | RAB | Radio Access Bearer, Random Access Burst |
| AMF | Access and Mobility Management Function | IMPI | IP Multimedia Private Identity | RACH | Random Access Channel |
| AN | Access Network | IMPU | IP Multimedia PUblic identity | RADIUS | Remote Authentication Dial In User Service |
| ANR | Automatic Neighbour Relation | IMS | IP Multimedia Subsystem | RAN | Radio Access Network |
| AP | Application Protocol, Antenna Port, Access Point | IMSI | International Mobile Subscriber Identity | RAND | RANDom number (used for authentication) |
| API | Application Programming Interface | IoT | Internet of Things | RAR | Random Access Response |
| APN | Access Point Name | IP | Internet Protocol | RAT | Radio Access Technology |
| ARP | Allocation and Retention Priority | Ipsec | IP Security, Internet Protocol Security | RAU | Routing Area Update |
| ARQ | Automatic Repeat Request | IP-CAN | IP-Connectivity Access Network | RB | Resource block, Radio Bearer |
| AS | Access Stratum | IP-M | IP Multicast | RBG | Resource block group |
| ASP | Application Service Provider | IPv4 | Internet Protocol Version 4 | REG | Resource Element Group |
| ASN.1 | Abstract Syntax Notation One | IPv6 | Internet Protocol Version 6 | Rel | Release |
| AUSF | Authentication Server Function | IR | Infrared | REQ | REQuest |
| AWGN | Additive White Gaussian Noise | IS | In Sync | RF | Radio Frequency |
| BAP | Backhaul Adaptation Protocol | IRP | Integration Reference Point | RI | Rank Indicator |
| BCH | Broadcast Channel | ISDN | Integrated Services Digital Network | RIV | Resource indicator value |
| BER | Bit Error Ratio | ISIM | IM Services Identity Module | RL | Radio Link |
| BFD | Beam Failure Detection | ISO | International Organisation for Standardisation | RLC | Radio Link Control, Radio Link Control layer |
| BLER | Block Error Rate | ISP | Internet Service Provider | RLC AM | RLC Acknowledged Mode |
| BPSK | Binary Phase Shift Keying | IWF | Interworking-Function | RLC UM | RLC Unacknowledged Mode |
| BRAS | Broadband Remote Access Server | I-WLAN | Interworking WLAN | RLF | Radio Link Failure |
| BSS | Business Support System | Constraint length of the convolutional code, USIM Individual key | | RLM | Radio Link Monitoring |
| BS | Base Station | kB | Kilobyte (1000 bytes) | RLM-RS | Reference Signal for RLM |
| BSR | Buffer Status Report | kbps | kilo-bits per second | RM | Registration Management |
| BW | Bandwidth | Kc | Ciphering key | RMC | Reference Measurement Channel |
| BWP | Bandwidth Part | Ki | Individual subscriber authentication key | RMSI | Remaining MSI, Remaining Minimum System Information |
| C-RNTI | Cell Radio Network Temporary Identity | KPI | Key Performance Indicator | RN | Relay Node |
| CA | Carrier Aggregation, Certification Authoritv | KQI | Key Quality Indicator | RNC | Radio Network Controller |
| CAPEX | CAPital EXpenditure | KSI | Kev Set Identifier | RNL | Radio Network Laver |
| CBRA | Contention Based Random Access | ksps | kilo-symbols per second | RNTI | Radio Network Temporary Identifier |
| CC | Component Carrier, Country Code, Cryptographic Checksum | KVM | Kernel Virtual Machine | ROHC | RObust Header Compression |
| CCA | Clear Channel Assessment | L1 | Layer 1 (physical layer) | RRC | Radio Resource Control, Radio Resource Control layer |
| CCE | Control Channel Element | L1-RSRP | Layer 1 reference signal received power | RRM | Radio Resource Management |
| CCCH | Common Control Channel | L2 | Layer 2 (data link layer) | RS | Reference Signal |
| CE | Coverage Enhancement | L3 | Layer 3 (network layer) | RSRP | Reference Signal |
| | | | | | Received Power |
| CDM | Content Delivery Network | LAA | Licensed Assisted | RSRQ | Reference Signal |
| | | | Access | | Received Quality |
| CDMA | Code-Division Multiple | LAN | Local Area Network | RSSI | Received Signal |
| | Access | | | | Strength Indicator |
| CFRA | Contention Free Random Access | LADN | Local Area Data Network | RSU | Road Side Unit |
| CG | Cell Group | LBT | Listen Before Talk | RSTD | Reference Signal Time difference |
| CGF | Charging Gateway Function | LCM | LifeCycle Management | RTP | Real Time Protocol |
| CHF | Charging Function | LCR | Low Chip Rate | RTS | Ready-To-Send |
| CI | Cell Identity | LCS | Location Services | RTT | Round Trip Time |
| CID | Cell-ID (e.g., positioning method) | LCID | Logical Channel ID | Rx | Reception, Receiving, Receiver |
| CIM | Common Information Model | LI | Layer Indicator | S1AP | S1 Application Protocol |
| CIR | Carrier to Interference Ratio | LLC | Logical Link Control, Low Layer Compatibility | S1-MMES1 | for the control plane |
| CK | Cipher Key | LPLMN | Local PLMN | S1-U | S1 for the user plane |
| CM | Connection Management, Conditional Mandatory | LPP | LTE Positioning Protocol | S-GW | Serving Gateway |
| CMAS | Commercial Mobile Alert Service | LSB | Least Significant Bit | S-RNTI | SRNC Radio Network Temporary Identity |
| CMD | Command | LTE | Long Term Evolution | S-TMSI | SAE Temporary Mobile Station Identifier |
| CMS | Cloud Management System | LWA | LTE-WLAN aggregation | SA | Standalone operation mode |
| CO | Conditional Optional | LWIP | LTE/WLAN Radio Level Integration with IPsec Tunnel | SAE | System Architecture Evolution |
| CoMP | Coordinated Multi-Point | LTE | Long Term Evolution | SAP | Service Access Point |
| CORESET | Control Resource Set | M2M | Machine-to-Machine | SAPD | Service Access Point Descriptor |
| COTS | Commercial Off-The-Shelf | MAC | Medium Access Control (protocol layering context) | SAPI | Service Access Point Identifier |
| CP | Control Plane, Cyclic Prefix, Connection Point | MAC | Message authentication code (security/encryption context) | SCC | Secondary Component Carrier, Secondary CC |
| CPD | Connection Point Descriptor | MAC-A | MAC used for authentication and key agreement (TSG T WG3 context) | SCell | Secondary Cell |
| CPE | Customer Premise Equipment | MAC-I | MAC used for data integrity of signalling messages (TSG T WG3 context) | SCEF | Service Capability Exposure Function |
| CPICH | Common Pilot Channel | MANO | Management and Orchestration | SC-FDMA | Single Carrier Frequency Division Multiple Access |
| CQI | Channel Quality Indicator | MBMS | Multimedia Broadcast and Multicast Service | SCG | Secondary Cell Group |
| CPU | CSI processing unit, Central Processing Unit | MBSFN | Multimedia Broadcast multicast service Single Frequency Network | SCM | Security Context Management |
| C/R | Command/Response field bit | MCC | Mobile Country Code | SCS | Subcarrier Spacing |
| CRAN | Cloud Radio Access Network, Cloud RAN | MCG | Master Cell Group | SCTP | Stream Control Transmission Protocol |
| CRB | Common Resource Block | MCOT | Maximum Channel Occupancy Time | SDAP | Service Data Adaptation Protocol, Service Data Adaptation Protocol layer |
| CRC | Cyclic Redundancy Check | MCS | Modulation and coding scheme | SDL | Supplementary Downlink |
| CRI | Channel-State Information Resource Indicator, CSI-RS Resource Indicator | MDAF | Management Data Analytics Function | SDNF | Structured Data Storage Network Function |
| C-RNTI | Cell RNTI | MDAS | Management Data Analytics Service | SDP | Session Description Protocol |
| CS | Circuit Switched | MDT | Minimization of Drive Tests | SDSF | Structured Data Storage Function |
| CSAR | Cloud Service Archive | ME | Mobile Equipment | SDU | Service Data Unit |
| CSI | Channel-State Information | MeNB | master eNB | SEAF | Security Anchor Function |
| CSI-IM | CSI Interference Measurement | MER | Message Error Ratio | SeNB | secondary eNB |
| CSI-RS | CSI Reference Signal | MGL | Measurement Gap Length | SEPP | Security Edge Protection Proxy |
| CSI-RSRP | CSI reference signal received power | MGRP | Measurement Gap Repetition Period | SFI | Slot format indication |
| CSI-RSRQ | CSI reference signal received quality | MIB | Master Information Block, Management Information Base | SFTD | Space-Frequency Time Diversity, SFN and frame timing difference |
| CSI-SINR | CSI signal-to-noise and interference ratio | MIMO | Multiple Input Multiple Output | SFN | System Frame Number |
| CSMA | Carrier Sense Multiple Access | MLC | Mobile Location Centre | SgNB | Secondary gNB |
| CSMA/CA | CSMA with collision avoidance | MM | Mobility Management | SGSN | Serving GPRS Support Node |
| CSS | Common Search Space, Cell-specific Search Space | MME | Mobility Management Entity | S-GW | Serving Gateway |
| CTF | Charging Trigger Function | MN | Master Node | SI | System Information |
| CTS | Clear-to-Send | MNO | Mobile Network Operator | SI-RNTI | System Information RNTI |
| CW | Codeword | MO | Measurement Object, Mobile Originated | SIB | System Information Block |
| CWS | Contention Window Size | MPBCH | MTC Physical Broadcast CHannel | SIM | Subscriber Identity Module |
| D2D | Device-to-Device | MPDCCH | MTC Physical Downlink Control CHannel | SIP | Session Initiated Protocol |
| DC | Dual Connectivity, Direct Current | MPDSCH | MTC Physical Downlink Shared CHannel | SiP | System in Package |
| DCI | Downlink Control Information | MPRACH | MTC Physical Random Access CHannel | SL | Sidelink |
| DF | Deployment Flavour | MPUSCH | MTC Physical Uplink Shared Channel | SLA | Service Level Agreement |
| DL | Downlink | MPLS | MultiProtocol Label Switching | SM | Session Management |
| DMTF | Distributed Management Task Force | MS | Mobile Station | SMF | Session Management Function |
| DPDK | Data Plane Development Kit | MSB | Most Significant Bit | SMS | Short Message Service |
| DM-RS, DMRS | Demodulation Reference Signal | MSC | Mobile Switching Centre | SMSF | SMS Function |
| DN | Data network | MSI | Minimum System Information, MCH Scheduling Information | SMTC | SSB-based Measurement Timing Configuration |
| DNN | Data Network Name | MSID | Mobile Station Identifier | SN | Secondary Node, Sequence Number |
| DNAI | Data Network Access Identifier | MSIN | Mobile Station Identification Number | SoC | System on Chip |
| DRB | Data Radio Bearer | MSISDN | Mobile Subscriber ISDN Number | SON | Self-Organizing Network |
| DRS | Discovery Reference Signal | MT | Mobile Terminated, Mobile Termination | SpCell | Special Cell |
| DRX | Discontinuous Reception | MTC | Machine-Type Communications | SP-CSI-RNTI | Semi-Persistent CSI RNTI |
| DSL | Domain Specific Language. Digital Subscriber Line | mMTC | massive MTC, massive Machine-Type Communications | SPS | Semi-Persistent Scheduling |
| DSLAM | DSL Access Multiplexer | MU-MIMO | Multi User MIMO | SQN | Sequence number |
| DwPTS | Downlink Pilot Time Slot | MWUS | MTC wake-up signal, MTC WUS | SR | Scheduling Request |
| E-LAN | Ethernet Local Area Network | NACK | Negative Acknowledgement | SRB | Signalling Radio Bearer |
| E2E | End-to-End | NAI | Network Access Identifier | SRS | Sounding Reference Signal |
| ECCA | extended clear channel assessment, extended CCA | NAS | Non-Access Stratum, Non-Access Stratum layer | SS | Synchronization Signal |
| ECCE | Enhanced Control Channel Element, Enhanced CCE | NCT | Network Connectivity Topology | SSB | Synchronization Signal Block |
| ED | Energy Detection | NC-JT | Non-Coherent Joint Transmission | SSID | Service Set Identifier |
| EDGE | Enhanced Datarates for GSM Evolution (GSM Evolution) | NEC | Network Capability Exposure | SS/PBCH | Block |
| EAS | Edge Application Server | NE-DC | NR-E-UTRA Dual Connectivity | SSBRI | SS/PBCH Block Resource Indicator, Synchronization Signal Block Resource Indicator |
| EASID | Edge Application Server Identification | NEF | Network Exposure Function | SSC | Session and Service Continuity |
| ECS | Edge Configuration Server | NF | Network Function | SS-RSRP | Synchronization Signal based Reference Signal Received Power |
| ECSP | Edge Computing Service Provider | NFP | Network Forwarding Path | SS-RSRQ | Synchronization Signal based Reference Signal Received Quality |
| EDN | Edge Data Network | NFPD | Network Forwarding Path Descriptor | SS-SINR | Synchronization Signal based Signal to Noise and Interference Ratio |
| EEC | Edge Enabler Client | NFV | Network Functions Virtualization | SSS | Secondary Synchronization Signal |
| EECID | Edge Enabler Client Identification | NFVI | NFV Infrastructure | SSSG | Search Space Set Group |
| EES | Edge Enabler Server | NFVO | NFV Orchestrator | SSSIF | Search Space Set Indicator |
| EESID | Edge Enabler Server Identification | NG | Next Generation, Next Gen | SST | Slice/Service Types |
| EHE | Edge Hosting Environment | NGEN-DC | NG-RAN E-UTRA-NR Dual Connectivity | SU-MIMO | Single User MIMO |
| EGMF | Exposure Governance tableManagement Function | NM | Network Manager | SUL | Supplementary Uplink |
| EGPRS | Enhanced GPRS | NMS | Network Management System | TA | Timing Advance, Tracking Area |
| EIR | Equipment Identity Register | N-PoP | Network Point of Presence | TAC | Tracking Area Code |
| eLAA | enhanced Licensed Assisted Access, enhanced LAA | NMIB, | N-MIB Narrowband MIB | TAG | Timing Advance Group |
| EM | Element Manager | NPBCH | Narrowband Physical Broadcast CHannel | TAI | Tracking Area Identity |
| eMBB | Enhanced Mobile Broadband | NPDCCH | Narrowband Physical Downlink Control CHannel | TAU | Tracking Area Update |
| EMS | Element Management System | NPDSCH | Narrowband Physical Downlink Shared CHannel | TB | Transport Block |
| eNB | evolved NodeB, E-UTRAN Node B | NPRACH | Narrowband Physical Random Access CHannel | TBS | Transport Block Size |
| EN-DC | E-UTRA-NR Dual Connectivitv | NPUSCH | Narrowband Physical Uplink Shared CHannel | TBD | To Be Defined |
| EPC | Evolved Packet Core | NPSS | Narrowband Primary Synchronization Signal | TCI | Transmission Configuration Indicator |
| EPDCCH | enhanced PDCCH, enhanced Physical Downlink Control Cannel | NSSS | Narrowband Secondary Synchronization Signal | TCP | Transmission Communication Protocol |
| EPRE | Energy per resource element | NR | New Radio, Neighbour Relation | TDD | Time Division Duplex |
| EPS | Evolved Packet System | NRF | NF Repository Function | TDM | Time Division Multiplexing |
| EREG | enhanced REG, enhanced resource element groups | NRS | Narrowband Reference Signal | TDMA | Time Division Multiple Access |
| ETSI | European Telecommunications Standards Institute | NS | Network Service | TE | Terminal Equipment |
| ETWS | Earthquake and Tsunami Warning System | NSA | Non-Standalone operation mode | TEID | Tunnel End Point Identifier |
| eUICC | embedded UICC, embedded Universal Integrated Circuit Card | NSD | Network Service Descriptor | TFT | Traffic Flow Template |
| E-UTRA | Evolved UTRA | NSR | Network Service Record | TMSI | Temporary Mobile Subscriber Identity |
| E-UTRAN | Evolved UTRAN | NSSAI | Network Slice Selection Assistance Information | TNL | Transport Network Layer |
| EV2X | Enhanced V2X | S-NNSAI | Single-NSSAI | TPC | Transmit Power Control |
| F1AP | F1 Application Protocol | NSSF | Network Slice Selection Function | TPMI | Transmitted Precoding Matrix Indicator |
| F1-C | F1 Control plane interface | NW | Network | TR | Technical Report |
| F1-U | F1 User plane interface | NWUS | Narrowband wake-up signal, Narrowband WUS | TRP, TRxP | Transmission Reception Point |
| FACCH | Fast Associated Control CHannel | NZP | Non-Zero Power | TRS | Tracking Reference Signal |
| FACCH/F | Fast Associated Control Channel/Full rate | O&M | Operation and Maintenance | TRx | Transceiver |
| FACCH/H | Fast Associated Control Channel/Half rate | ODU2 | Optical channel Data Unit - type 2 | TS | Technical Specifications, Technical Standard |
| FACH | Forward Access Channel | OFDM | Orthogonal Frequency Division Multiplexing | TTI | Transmission Time Interval |
| FAUSCH | Fast Uplink Signalling Channel | OFDMA | Orthogonal Frequency Division Multiple Access | Tx | Transmission, Transmitting, Transmitter |
| FB | Functional Block | OOB | Out-of-band | U-RNTI | UTRAN Radio Network Temporary Identity |
| FBI | Feedback Information | OOS | Out of Sync | UART | Universal Asynchronous Receiver and Transmitter |
| FCC | Federal Communications Commission | OPEX | OPerating EXpense | UCI | Uplink Control Information |
| FCCH | Frequency Correction CHannel | OSI | Other System Information | UE | User Equipment |
| FDD | Frequency Division Duplex | OSS | Operations Support System | UDM | Unified Data Management |
| FDM | Frequency Division Multiplex | OTA | over-the-air | UDP | User Datagram Protocol |
| FDMA | Frequency Division Multiple Access | PAPR | Peak-to-Average Power Ratio | UDSF | Unstructured Data Storage Network Function |
| FE | Front End | PAR | Peak to Average Ratio | UICC | Universal Integrated Circuit Card |
| FEC | Forward Error Correction | PBCH | Physical Broadcast Channel | UL | Uplink |
| FFS | For Further Study | PC | Power Control, Personal Computer | UM | Unacknowledged Mode |
| FFT | Fast Fourier Transformation | PCC | Primary Component Carrier, Primary CC | UML | Unified Modelling Language |
| feLAA | further enhanced Licensed Assisted Access, further enhanced LAA | PCell | Primary Cell | UMTS | Universal Mobile Telecommunications System |
| FN | Frame Number | PCI | Physical Cell ID, Physical Cell Identity | UP | User Plane |
| FPGA | Field-Programmable Gate Array | PCEF | Policy and Charging Enforcement Function | UPF | User Plane Function |
| FR | Frequency Range | PCF | Policy Control Function | URI | Uniform Resource Identifier |
| FQDN | Fully Qualified Domain Name | PCRFPolicy | Control and Charging Rules Function | URL | Uniform Resource Locator |
| G-RNTI | GERAN Radio Network Temporary Identity | PDCP | Packet Data Convergence Protocol, Packet Data Convergence Protocol layer | URLLC | Ultra-Reliable and Low Latency |
| GERAN | GSM EDGE RAN, GSM EDGE Radio Access Network | PDCCH | Physical Downlink Control Channel | USB | Universal Serial Bus |
| GGSN | Gateway GPRS Support Node | PDCP | Packet Data Convergence Protocol | USIM | Universal Subscriber Identity Module |
| GLONASS | GLObal'naya NAvigatsionnaya Sputnikovaya Sistema (Engl.: Global Navigation Satellite System) | PDN | Packet Data Network, Public Data Network | USS | UE-specific search space |
| gNB | Next Generation NodeB | PDSCH | Physical Downlink Shared Channel | UTRA | UMTS Terrestrial Radio Access |
| gNB-CUgNB- | centralized unit, Next Generation NodeB centralized unit | PDU | Protocol Data Unit | UTRAN | Universal Terrestrial Radio Access Network |
| gNB-DUgNB- | distributed unit, Next Generation NodeB distributed unit | PEI | Permanent Equipment Identifiers | UwPTS | Uplink Pilot Time Slot |
| GNSS | Global Navigation Satellite System | PFD | Packet Flow Description | V2I | Vehicle-to-Infrastruction |
| GPRS | General Packet Radio Service | P-GW | PDN Gateway | V2P | Vehicle-to-Pedestrian |
| GPSI | Generic Public Subscription Identifier | PHICH | Physical hybrid-ARQ indicator channel | V2V | Vehicle-to-Vehicle |
| GSM | Global System for Mobile Communications, Groupe Spécial Mobile | PHY | Physical layer | V2X | Vehicle-to-everything |
| GTP | GPRS Tunneling Protocol | PLMN | Public Land Mobile Network | VIM | Virtualized Infrastructure Manager |
| GTP-U | GPRS Tunnelling Protocol for User Plane | PIN | Personal Identification Number | VL | Virtual Link, |
| GTS | Go To Sleep Signal (related to WUS) | PM | Performance Measurement | VLAN | Virtual LAN, Virtual Local Area Network |
| GUMMEI | Globally Unique MME Identifier | PMI | Precoding Matrix Indicator | VM | Virtual Machine |
| GUTI | Globally Unique Temporary UE Identity | PNF | Physical Network Function | VNF | Virtualized Network Function |
| HARQ | Hybrid ARQ, Hybrid Automatic Repeat Request | PNFD | Physical Network Function Descriptor | VNFFG | VNF Forwarding Graph |
| HANDO | Handover | PNFR | Physical Network Function Record | VNFFGD | VNF Forwarding Graph Descriptor |
| HFN | HyperFrame Number | POC | PTT over Cellular | VNFM | VNF Manager |
| HHO | Hard Handover | PP, PTP | Point-to-Point | VoIP | Voice-over-IP, Voice-over-Internet Protocol |
| HLR | Home Location Register | PPP | Point-to-Point Protocol | VPLMN | Visited Public Land Mobile Network |
| HN | Home Network | PRACH | Physical RACH | VPN | Virtual Private Network |
| HO | Handover | PRB | Physical resource block | VRB | Virtual Resource Block |
| HPLMN | Home Public Land Mobile Network | PRG | Physical resource block group | WiMAX | Worldwide Interoperability for Microwave Access |
| HSDPA | High Speed Downlink Packet Access | ProSe | Proximity Services, Proximity-Based Service | WLAN | Wireless Local Area Network |
| HSN | Hopping Sequence Number | PRS | Positioning Reference Signal | WMAN | Wireless Metropolitan Area Network |
| HSPA | High Speed Packet Access | PRR | Packet Reception Radio | WPAN | Wireless Personal Area Network |
| HSS | Home Subscriber Server | PS | Packet Services | X2-C | X2-Control plane |
| HSUPA | High Speed Uplink Packet Access | PSBCH | Physical Sidelink Broadcast Channel | X2-U | X2-User plane |
| HTTP | Hyper Text Transfer Protocol | PSDCH | Physical Sidelink Downlink Channel | XML | eXtensible Markup Language |
| HTTPS | Hyper Text Transfer Protocol Secure (https is http/1.1 over SSL, i.e. port 443) | PSCCH | Physical Sidelink Control Channel | XRES | EXpected user RESponse |
| I-Block | Information Block | PSSCH | Physical Sidelink Shared Channel | XOR | eXclusive OR |
| ICCID | Integrated Circuit Card Identification | PSCell | Primary SCell | ZC | Zadoff-Chu |
| IAB | Integrated Access and Backhaul | PSS | Primary Synchronization Signal | ZP | Zero Po |
| ICIC | Inter-Cell Interference Coordination | PSTN | Public Switched Telephone Network | | |
| ID | Identity, identifier | PT-RS | Phase-tracking reference signal | | |
| IDFT | Inverse Discrete Fourier Transform | PTT | Push-to-Talk | | |
| IE | Information element | PUCCH | Physical Uplink Control Channel | | |

The foregoing description provides illustration and description of various example embodiments, but is not intended to be exhaustive or to limit the scope of embodiments to the precise forms disclosed. Modifications and variations are possible in light of the above teachings or may be acquired from practice of various embodiments. Where specific details are set forth in order to describe example embodiments of the disclosure, it should be apparent to one skilled in the art that the disclosure can be practiced without, or with variation of, these specific details. It should be understood, however, that there is no intent to limit the concepts of the present disclosure to the particular forms disclosed, but on the contrary, the intention is to cover all modifications, equivalents, and alternatives consistent with the present disclosure and the appended claims.

## Claims

1. A device for a wireless communication network, the device comprising processing circuitry coupled to storage, the processing circuitry is configured to:
receive a request for a data collection service from a data consumer;
determine, based on the request, network functions to form a data management pipeline, wherein the network functions comprise at least one of a data processing function and/or a data repository function; and
establish, for the data collection service, a data flow path identified by a data flow identifier, wherein the data flow path comprises the determined network functions.

2. The device of claim 1, wherein the request for the data collection service comprises a service identifier representing an identification of the data consumer, and a list of service attributes for the data collection service.

3. The device of any one of claims 1 to 2, wherein the processing circuitry is further configured to:
determine a list of candidate data providers based on the request; and
send a data provider verification request to a data security and validity function to authenticate the candidate data providers.

4. The device of any one of claims 1 to 3, wherein the processing circuitry is further configured to:
check if a prior data collection service request is in process for a same service identifier and service attributes; and
if the prior data collection service request is in process, establish the data flow path by modifying an existing data flow path identified by an existing data flow identifier.

5. The device of any one of claims 1 to 4, wherein the processing circuitry is configured to determine the network functions by utilizing a network repository function to discover the data processing function and the data repository function.

6. The device of any one of claims 1 to 4, wherein the processing circuitry is further configured to:
verify user consent if part of data to be collected from data providers is user data; and
subscribe to a data security and validity function or a function for user consent to receive updates regarding changes to the user consent.

7. The device of any one of claims 1 to 6, wherein the processing circuitry is further configured to:
invoke event subscription requests to data providers associated with the data flow path; and
receive an event notification response from a data provider of the data providers when new data for a subscribed event is available.

8. The device of claim 7, wherein the event notification response is tagged with the data flow identifier for further data management by the device.

9. The device of any one of claims 1 to 8, wherein the processing circuitry is configured to send a data management processing request to the data processing function, wherein the data management processing request comprises a data repository function identifier indicating where processed data is to be stored.

10. The device of claim 9, wherein the processing circuitry is configured to receive a response from the data processing function indicating that collected and processed data is stored in the data repository function with a data set tag assigned corresponding to the data flow identifier,
wherein the processing circuitry is further configured to send a data management storage request to the data repository function where event data associated with the data flow identifier are stored, and receive a response from the data repository function that the data is stored with the data set tag.

11. The device of any one of claims 1 to 10, wherein the processing circuitry is further configured to:
receive a notification regarding a change in a user consent status; and
unsubscribe for data collection corresponding to a user equipment associated with the user consent status and send a data management delete message to the data repository function.

12. The device of any one of claims 1 to 11, wherein the processing circuitry is further configured to:
receive an unsubscribe message from the data consumer; and
delete the data flow path and release instances of the network functions associated with the data flow identifier.

13. The device of any one of claims 1 to 12, wherein the processing circuitry is further configured to control a publish/subscribe data broker that delivers data topics, and issue pub/subtopic grants on the data broker.

14. A system for the wireless communication network, the system comprising the device of any one of claims 1 to 13; and
a data processing function comprising:
means for receiving a data management processing request from the device;
means for performing at least one of: data formatting, processing, and/or annotation on collected data according to received data processing attributes to transform the collected data into a format required to meet operational needs of the wireless communication network; and
means for facilitating storage of the processed data in the data repository function.

15. An apparatus comprising:
means for receiving a request for a data collection service from a data consumer;
means for determining, based on the request, network functions to form a data management pipeline, wherein the network functions comprise at least one of a data processing function and/or a data repository function; and
means for establishing, for the data collection service, a data flow path identified by a data flow identifier, wherein the data flow path comprises the determined network functions.
